# EUROPEAN PATENT APPLICATION

(11) **EP 4 852 331 A1**
(43) Date of publication of application: **09.12.2026**
(21) Application number: 26171133.7
(22) Date of filing: 08.04.2026
(51) Int. Cl.: H04B 1/04, H04B 1/18, H04B 1/3805

(54) **COMMUNICATIONS CIRCUITRY WITH RECONFIGURABLE FEEDBACK PATH**

(30) Priority: 03.06.2025 US 202519227167
(71) Applicant: Apple Inc., Cupertino, CA 95014 (US)
(72) Inventor: TANG, Xin, Cupertino, CA, 95014 (US); KANANIAN, Siavash, Cupertino, CA, 95014 (US); GOMEZ DUARTE, Camilo, Cupertino, CA, 95014 (US); POURGHORBAN SAGHATI, Alireza, Cupertino, CA, 95014 (US)
(74) Representative: Zacco Denmark A/S

(57) **Abstract**

Wireless circuitry may include a radio chip with a transmitter and a loopback receiver. A front-end module (FEM) may be disposed on a radio-frequency transmission line path coupled to the transmitter. The FEM may include a signal coupler. A loopback path may couple the signal coupler to the loopback receiver. The transmitter may transmit signals at a transmit power level. The signal path may couple a corresponding loopback signal off the transmission line path and onto the loopback path. The radio chip may include adjustable matching circuitry on the loopback path that adjusts an input impedance of the loopback receiver based on the transmit power level. Additionally, or alternatively, the FEM may include adjustable attenuator circuitry on the loopback path that adjusts an attenuation level of the loopback signal based on the transmit power level. This may serve to effectively extend the dynamic range of the loopback receiver.

## Description

### Field

This disclosure relates generally to electronic devices, including electronic devices with communications circuitry.

### Background

Electronic devices are often provided with wireless communications capabilities. An electronic device with wireless communications capabilities includes transmitter circuitry that transmits radio-frequency signals and includes receiver circuitry that receives radio-frequency signals. It can be difficult to provide an electronic device with transmitter circuitry and receiver circuitry that exhibit sufficient levels of radio-frequency performance over a wide range of operating conditions.

### Summary

An electronic device may be provided with wireless circuitry. The wireless circuitry may include a radio chip. The radio chip may include a transmitter coupled to a radio-frequency transmission line path. A front-end module (FEM) may be disposed on the radio-frequency transmission line path. The FEM may include a signal coupler on the radio-frequency transmission line path. The radio chip may include a loopback receiver. A loopback path may couple a coupled node of the signal coupler to the loopback receiver. The transmitter may transmit radio-frequency signals onto the radio-frequency transmission line path at a transmit power level. The signal coupler may couple a portion of the radio-frequency signals onto the loopback path as loopback signals. The loopback path may convey the loopback signals to the loopback receiver.

To extend the dynamic range of the loopback receiver over a wide range of transmit power levels, the radio chip may include adjustable matching circuitry on the loopback path between the loopback receiver and a loopback signal input port of the radio chip. The adjustable matching circuitry may include a set of switchable resistors coupled in parallel between the loopback path and a reference potential. Control signals may adjust the set of switchable resistors to configure the adjustable matching circuitry to change the input impedance of the loopback receiver based on the transmit power level of the transmitter. The control signals may control the adjustable matching circuitry to increase the input impedance above an impedance of the loopback path when the transmit power level is less than a first threshold. This may serve to increase a signal-to-noise ratio (SNR) of the loopback receiver while operating in a noise-limited region. The control signals may control the adjustable matching circuitry to decrease the input impedance below the impedance of the loopback path when the transmit power level exceeds a second threshold. This may serve to relax the linearity requirement of the loopback receiver while operating in a linearity-limited region. The control signals may control the adjustable matching circuitry to match the input impedance to the impedance of the loopback path when the transmit power level is above the first threshold and below the second threshold.

Additionally, or alternatively, the FEM may include adjustable attenuator circuitry on the loopback path between the coupled node of the signal coupler and a loopback signal output port of the FEM. The adjustable attenuator circuitry may include a set of switchable resistors coupled in series between the coupled node of the signal coupler and the loopback signal output port. An input-output (I/O) signal received at the FEM may adjust the switchable resistors to switch the adjustable attenuator circuitry between at least a first attenuation level and a second attenuation level. The adjustable attenuator circuitry may be configured to exhibit a relatively high attenuation level when the transmit power level exceeds a threshold, helping to relax the linearity requirement of the loopback receiver. The adjustable attenuator circuitry may be configured to exhibit a relatively low attenuation level when the transmit power level is less than the threshold, helping to increase the SNR of the loopback receiver. Alternatively, the adjustable attenuator circuitry may include a set of resistors and one or more diodes coupled between the resistors and the coupled node of the signal coupler. The diodes may effectively increase the attenuation level when the transmit power level exceeds the threshold and may effectively decrease the attenuation level when the transmit power level is less than the threshold.

An aspect of the disclosure provides wireless circuitry. The wireless circuitry can include a radio chip. The wireless circuitry can include a transmitter on the radio chip. The wireless circuitry can include a loopback receiver on the radio chip. The wireless circuitry can include a radio-frequency transmission line path coupled to the transmitter. The wireless circuitry can include a front-end module (FEM) disposed on the radio-frequency transmission line path. The wireless circuitry can include a signal coupler on the FEM and coupled to the radio-frequency transmission line path. The wireless circuitry can include a loopback path that couples the signal coupler on the FEM to the loopback receiver on the radio chip. The wireless circuitry can include adjustable matching circuitry on the radio chip, coupled to the loopback path, and configured to adjust an input impedance of the loopback receiver.

An aspect of the disclosure includes a radio chip. The radio chip can include a transmitter. The radio chip can include a first transmission line that couples the transmitter to a signal port of the radio chip, wherein the transmitter is configured to output a radio-frequency signal onto the transmission line at a transmit power level. The radio chip can include a loopback receiver. The radio chip can include a second transmission line that couples a loopback signal port of the radio chip to the loopback receiver, wherein the loopback receiver is configured to receive a loopback signal associated with the radio-frequency signal via the second transmission line. The radio chip can include matching circuitry coupled to the second transmission line and configured to adjust, based on the transmit power level, an input impedance of the loopback receiver.

An aspect of the disclosure provides a method of operating wireless circuitry. The method can include transmitting, using a transmitter, a radio-frequency signal onto a radio-frequency transmission line path at a transmit power level. The method can include coupling, using a signal coupler, a portion of the radio-frequency signal off of the radio-frequency transmission line path and onto a loopback path. The method can include conveying, using the loopback path, the portion of the radio-frequency signal from the signal coupler to a loopback receiver. The method can include adjusting, using matching circuitry on the loopback path, an input impedance of the loopback receiver based on a transmit power level of the radio-frequency signal.

### Brief Description of the Drawings

FIG. 1 is a diagram of an illustrative electronic device having wireless circuitry in accordance with some embodiments.
FIG. 2 is a diagram of illustrative wireless circuitry that includes transceiver circuitry in accordance with some embodiments.
FIG. 3 is a circuit diagram of illustrative wireless circuitry that includes a radio chip and a front end module that are coupled together by a signal path and a loopback path in accordance with some embodiments.
FIG. 4 is a circuit diagram of illustrative adjustable on-chip matching circuitry for a loopback receiver on a radio chip in accordance with some embodiments.
FIG. 5 is a state diagram of illustrative operating modes for wireless circuitry having a radio chip and a front end module coupled together by a signal path and a loopback path in accordance with some embodiments.
FIG. 6 is a plot showing how the gain of an illustrative loopback receiver may be trimmed for different loopback receiver gain settings in accordance with some embodiments.
FIG. 7 is a circuit diagram of an illustrative front end module that includes a signal coupler and a switch-based adjustable attenuator that couples the signal coupler to a loopback path in accordance with some embodiments.
FIG. 8 is a circuit diagram of an illustrative front end module that includes a signal coupler and a diode-based adjustable attenuator that couples the signal coupler to a loopback path in accordance with some embodiments.
FIG. 9 is a plot depicting how an illustrative adjustable attenuator of the types shown in FIGS. 7 and 8 may serve to increase the dynamic range of a loopback receiver in accordance with some embodiments.
FIG. 10 is a flow chart of illustrative operations involved in performing radio-frequency signal transmission using wireless circuitry in accordance with some embodiments.

### Detailed Description

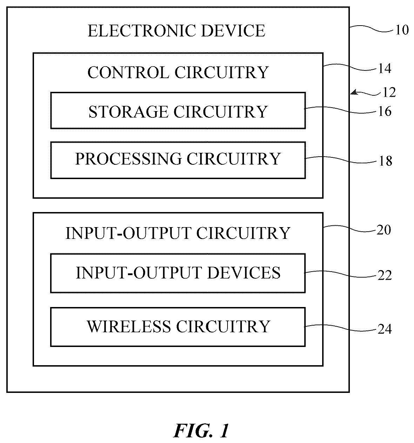

FIG. 1 is a block diagram of an electronic device 10 that may be provided with communications circuitry. Device 10 may be a computing device such as a laptop computer, a desktop computer, a computer monitor (e.g., containing an embedded computer), a tablet computer, a cellular telephone, a media player, or another handheld or portable electronic device, a smaller device such as a wristwatch device, a pendant device, a headphone or earpiece device, a device embedded in eyeglasses, goggles, a helmet, or other equipment worn on a user's head (e.g., an augmented, virtual, or mixed reality head-mounted display device), or another wearable or miniature device, a television, a computer display (e.g., that does not contain an embedded computer), a gaming device, a navigation device, an embedded system such as a system in which electronic equipment with a display is mounted in a kiosk or automobile, a wireless internet-connected voice-controlled speaker, a home entertainment device, a remote control device, a gaming controller, a peripheral user input device, a wireless base station or access point, equipment that implements the functionality of two or more of these devices, or other electronic equipment.

As shown in the functional block diagram of FIG. 1, device 10 may include components located on or within an electronic device housing such as housing 12. Housing 12, which may sometimes be referred to as a case, may be formed from plastic, glass, ceramics, fiber composites, metal (e.g., stainless steel, aluminum, metal alloys, etc.), other suitable materials, or a combination of these materials. In some embodiments, some or all of housing 12 may be formed from dielectric or other low-conductivity material (e.g., glass, ceramic, plastic, sapphire, etc.). In other embodiments, housing 12 or at least some of the structures that make up housing 12 may be formed from metal elements.

Device 10 may include control circuitry 14. Control circuitry 14 may include storage such as storage circuitry 16. Storage circuitry 16 may include hard disk drive storage, nonvolatile memory (e.g., flash memory or other electrically-programmable-read-only memory configured to form a solid-state drive), volatile memory (e.g., static or dynamic random-access-memory), etc. Storage circuitry 16 may include storage that is integrated within device 10 and/or removable storage media.

Control circuitry 14 may include processing circuitry such as processing circuitry 18. Processing circuitry 18 may be used to control the operation of device 10. Processing circuitry 18 may include on one or more processors such as microprocessors, microcontrollers, digital signal processors, host processors, baseband processor integrated circuits, application specific integrated circuits, central processing units (CPUs), application processors, graphics processing units (GPUs), image processors, video processors, audio processors, etc. Control circuitry 14 may be configured to perform operations in device 10 using hardware (e.g., dedicated hardware or circuitry), firmware, and/or software. Software code for performing operations in device 10 may be stored on storage circuitry 16 (e.g., storage circuitry 16 may include non-transitory (tangible) computer readable storage media that stores the software code). The software code may sometimes be referred to as program instructions, software, data, instructions, or code. Software code stored on storage circuitry 16 may be executed by processing circuitry 18.

Control circuitry 14 may be used to run software on device 10 such as satellite navigation applications, internet browsing applications, voice-over-internet-protocol (VOIP) telephone call applications, email applications, media playback applications, operating system functions, etc. To support interactions with external equipment, control circuitry 14 may be used in implementing wireless communications protocols (sometimes also referred to as communications protocols or communications standards). Communications protocols (standards) that may be implemented using control circuitry 14 include wireless local area network (WLAN) protocols (e.g., IEEE 802.11 protocols - sometimes referred to as Wi-Fi^{®} such as a Wi-Fi 6 protocol, a Wi-Fi 7 protocol, or other Wi-Fi protocols), protocols for other short-range wireless communications links such as the Bluetooth^{®} protocol or other wireless personal area network (WPAN) protocols, IEEE 802.11ad protocols (e.g., ultra-wideband protocols), cellular telephone protocols (e.g., 3G protocols, 4G (LTE) protocols, 3GPP Fifth Generation (5G) New Radio (NR) protocols, Sixth Generation (6G) protocols, sub-THz protocols, THz protocols, etc.), satellite navigation system protocols (e.g., global positioning system (GPS) protocols, global navigation satellite system (GLONASS) protocols, etc.), satellite communications (satcom) protocols, antenna-based spatial ranging protocols, optical communications protocols, or any other desired communications protocols. Each communications protocol may be associated with a corresponding radio access technology (RAT) that specifies the physical connection methodology used in implementing the protocol (e.g., used in transmitting and/or receiving radio-frequency signals under or according to the protocol).

Device 10 may include input-output circuitry 20. Input-output circuitry 20 may include input-output devices 22. Input-output devices 22 may be used to allow data to be supplied to device 10 and to allow data to be provided from device 10 to external devices. Input-output devices 22 may include user interface devices, data port devices, and other input-output components. For example, input-output devices 22 may include touch sensors, displays (e.g., touch-sensitive and/or force-sensitive displays), light-emitting components such as displays without touch sensor capabilities, buttons (mechanical, capacitive, optical, etc.), scrolling wheels, touch pads, key pads, keyboards, microphones, cameras, buttons, speakers, status indicators, audio jacks and other audio port components, digital data port devices, motion sensors (accelerometers, gyroscopes, and/or compasses that detect motion), capacitance sensors, proximity sensors, magnetic sensors, force sensors (e.g., force sensors coupled to a display to detect pressure applied to the display), etc. In some configurations, keyboards, headphones, displays, pointing devices such as trackpads, mice, and joysticks, and other input-output devices may be coupled to device 10 using wired or wireless connections (e.g., some of input-output devices 22 may be peripherals that are coupled to a main processing unit or other portion of device 10 via a wired or wireless link).

Input-output circuitry 20 may include communications circuitry that supports communications between components of device 10 and/or between device 10 and one or more external devices. The communications circuitry may include wired communications circuitry that conveys signals via one or more wired communications links over one or more wired paths (e.g., optical fiber paths, Ethernet paths, coaxial cable paths, conductive lines, serial paths, digital paths, analog paths, data paths, signal paths, interconnects, ports, etc.). Additionally, or alternatively, the communications circuitry may include wireless circuitry 24 that supports wireless communications (e.g., communications using wireless radio-frequency signals). Wireless circuitry 24 (sometimes referred to herein as wireless communications circuitry 24) may include one or more antennas. Wireless circuitry 24 may also include baseband processor circuitry, transceiver circuitry, amplifier circuitry, filter circuitry, switching circuitry, radio-frequency transmission lines, and/or any other circuitry for transmitting and/or receiving radio-frequency signals using the antenna(s).

Wireless communications performed by wireless circuitry 24 may include or involve wireless data communications (e.g., where wireless data is carried by radio-frequency signals conveyed between wireless circuitry 24 and other communications equipment bidirectionally or unidirectionally), radio-frequency signal transmission, radio-frequency signal reception, and/or radio-based spatial ranging/sensing (e.g., radio detection and ranging (radar) operations, shorter range object detection such as near-field radio-frequency signal-based object detection, etc.). Radio-frequency signals conveyed by wireless circuitry 24 may include or carry wireless data (e.g., organized into frames, packets, symbols, datagrams, etc.), radar or other spatial ranging waveforms, continuous wave signals, chirp signals, control signals, management signals, reference signals, beacon signals, tones, pulses/impulses, paging signals, waveforms associated with one or more communications protocols, and/or any other radio-frequency waveforms or signals. Wireless circuitry 24 is sometimes also referred to herein as wireless communications circuitry 24, wireless communication circuitry 24, communication circuitry 24, or simply as circuitry 24. Wireless circuitry 24 may include one or more antennas. Wireless circuitry 24 may also include baseband processor circuitry, transceiver circuitry, amplifier circuitry, filter circuitry, switching circuitry, radio-frequency transmission lines, and/or any other circuitry for transmitting and/or receiving radio-frequency signals using the antenna(s). Some or all of the components of wireless circuitry 24 may be disposed on, mounted to, and/or integrated within the same substrate (e.g., a printed circuit board, semiconductor substrate, chip, integrated circuit (IC), IC packages, etc.) or may be distributed between two or more substrates (e.g., printed circuit boards, semiconductor substrates, chips, ICs, IC packages, etc.). Some or all of the signal generation, transmission, and/or reception operations described herein as being performed by wireless circuitry 24 may alternatively be performed by wired communications circuitry in input-output circuitry 20.

Wireless circuitry 24 may transmit and/or receive radio-frequency signals within a corresponding frequency band at radio frequencies (sometimes referred to herein as a communications band or simply as a "band"). The frequency bands handled by wireless circuitry 24 may include wireless local area network (WLAN) frequency bands (e.g., Wi-Fi^{®} (IEEE 802.11) or other WLAN communications bands) such as a 2.4 GHz WLAN band (e.g., from 2400 to 2480 MHz), a 5 GHz WLAN band (e.g., from 5180 to 5825 MHz), a Wi-Fi^{®} 6E band (e.g., from 5925-7125 MHz), a Wi-Fi^{®} 7 band, and/or other Wi-Fi^{®} bands (e.g., from 1875-5160 MHz), wireless personal area network (WPAN) frequency bands such as the 2.4 GHz Bluetooth^{®} band or other WPAN communications bands, cellular telephone frequency bands (e.g., bands from about 600 MHz to about 5 GHz, 3G bands, 4G LTE bands, 5G New Radio Frequency Range 1 (FR1) bands below 10 GHz, 5G New Radio Frequency Range 2 (FR2) bands between 20 and 60 GHz, etc.), other centimeter or millimeter wave frequency bands between 10-100 GHz, sub-THz frequency bands between around 100 GHz and 10 THz (e.g., 6G bands), near-field communications (NFC) frequency bands (e.g., at 13.56 MHz), satellite navigation frequency bands (e.g., a GPS band from 1565 to 1610 MHz, a Global Navigation Satellite System (GLONASS) band, a BeiDou Navigation Satellite System (BDS) band, etc.), ultra-wideband (UWB) frequency bands that operate under the IEEE 802.15.4 protocol and/or other ultra-wideband communications protocols, satellite communications (satcom) bands (e.g., an IEEE C band (4-8 GHz), S band (2-4 GHz), L band (1-2 GHz), X band (8-12 GHz), W band (75-110 GHz), V band (40-75 GHz), K band (18-27 GHz), Kₐ band (26.5-40 GHz), Kᵤ band (12-18 GHz), etc.), unlicensed bands, communications bands under the family of 3GPP wireless communications standards, communications bands under the IEEE 802.XX family of standards, and/or any other desired frequency bands of interest. Different communications protocols may utilize different frequency bands for conveying radio-frequency signals. In some cases, two or more communications protocols may utilize one or more of the same frequency bands for conveying radio-frequency signals.

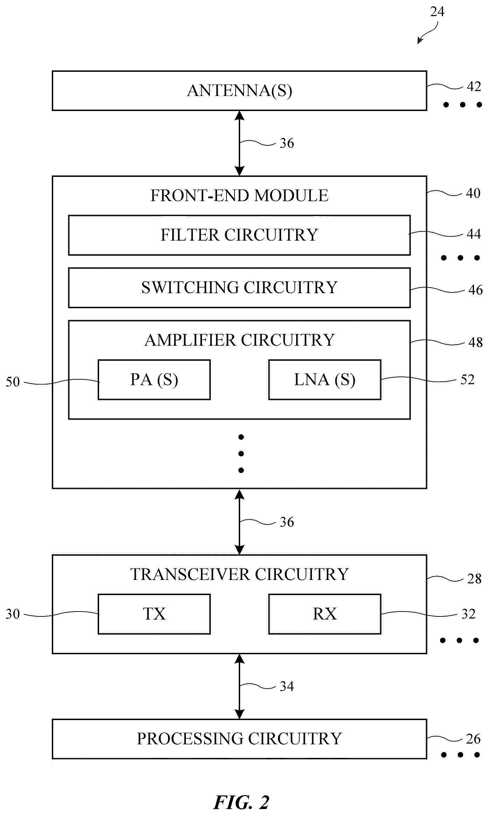

FIG. 2 is a diagram showing illustrative components within wireless circuitry 24. As shown in FIG. 2, wireless circuitry 24 may include processing circuitry such as processing circuitry 26, radio-frequency (RF) transceiver circuitry such as transceiver circuitry 28 (e.g., one or more transceivers), radio-frequency front-end circuitry such as radio-frequency front-end (RFFE) module 40, and antenna(s) 42. RFFE module 40 is sometimes also referred to herein simply as front-end module (FEM) 40. Processing circuitry 26 may be communicatively coupled to transceiver circuitry 28 over baseband path 34. Transceiver circuitry 28 may be communicatively coupled to antenna(s) 42 via one or more radio-frequency transmission line paths 36. FEM 40 may be disposed on radio-frequency transmission line path 36 between transceiver circuitry 28 and antenna(s) 42.

In the example of FIG. 2, wireless circuitry 24 is illustrated as including only a single transceiver circuitry 28 and a single FEM 40 for the sake of clarity. In general, wireless circuitry 24 may include any desired number of transceiver circuitries 28 and any desired number of FEMs 40. If desired, processing circuitry 26 may include different processing units (e.g., processors) coupled to one or more transceiver circuitries 28 over respective baseband paths 34. Each transceiver circuitry 28 may include a transmitter circuit such as transmitter (TX) 30 configured to output uplink signals to antenna(s) 42. Each transceiver circuitry 28 may include a receiver circuit such as receiver (RX) 32 configured to receive downlink signals from antenna(s) 42. Each transceiver circuitry 28 may be coupled to one or more antennas 42 over respective radio-frequency transmission line paths 36. If desired, transceiver circuitry 28 may include only transmitter 30 (e.g., may be a dedicated transmitter) or only receiver 32 (e.g., may be a dedicated receiver). Each radio-frequency transmission line path 36 may have a respective FEM 40 disposed thereon. If desired, two or more FEMs 40 may be disposed on the same radio-frequency transmission line path 36. If desired, one or more of the radio-frequency transmission line paths 36 in wireless circuitry 24 may be implemented without any front-end module disposed thereon.

A radio-frequency transmission line path 36 may be coupled to an antenna feed on an antenna 42. The antenna feed may, for example, include a positive antenna feed terminal and a ground antenna feed terminal. Radio-frequency transmission line path 36 may have a positive transmission line signal path such that is coupled to the positive antenna feed terminal on antenna 42. Radio-frequency transmission line path 36 may have a ground transmission line signal path that is coupled to the ground antenna feed terminal on antenna 42. This example is illustrative and, in general, antenna 42 may be fed using any desired antenna feeding scheme. If desired, antenna 42 may have multiple antenna feeds that are coupled to one or more radio-frequency transmission line paths 36.

A radio-frequency transmission line path 36 may include transmission lines that are used to route radio-frequency antenna signals within device 10 (FIG. 1). Transmission lines in device 10 may include coaxial cables, microstrip transmission lines, stripline transmission lines, edge-coupled microstrip transmission lines, edge-coupled stripline transmission lines, transmission lines formed from combinations of transmission lines of these types, etc. Transmission lines in device 10 such as transmission lines in radio-frequency transmission line path 36 may be integrated into rigid and/or flexible printed circuit boards.

In performing wireless transmission, processing circuitry 26 may provide baseband signals to transceiver circuitry 28 over baseband path 34. Transceiver circuitry 28 may include circuitry for converting the baseband signals received from processing circuitry 26 into corresponding radio-frequency signals. For example, transceiver circuitry 28 (e.g., transmitter 30) may include mixer circuitry for up-converting (or modulating) the baseband signals to radio-frequencies prior to transmission over antenna 42. Transceiver circuitry 28 may also include digital-to-analog converter (DAC) and/or analog-to-digital converter (ADC) circuitry for converting signals between digital and analog domains. Transceiver circuitry 28 may use transmitter 30 to transmit the radio-frequency signals over antenna(s) 42 via radio-frequency transmission line path(s) 36 and FEM 40. Antenna(s) 42 may transmit the radio-frequency signals to external wireless equipment by radiating the radio-frequency signals into free space.

In performing wireless reception, antenna(s) 42 may receive radio-frequency signals from the external wireless equipment. The received radio-frequency signals may be conveyed to transceiver circuitry 28 via radio-frequency transmission line path(s) 36 and FEM 40. Transceiver circuitry 28 may include circuitry such as receiver 32 for receiving signals from FEM 40 and for converting the received radio-frequency signals into corresponding baseband signals. For example, receiver 32 may include mixer circuitry for down-converting (or demodulating) the received radio-frequency signals to baseband frequencies prior to conveying the received signals to processing circuitry 26 over baseband path 34.

FEM 40 may include radio-frequency front-end circuitry that operates on the radio-frequency signals conveyed (transmitted and/or received) over radio-frequency transmission line path 36. FEM 40 may, for example, include radio-frequency components (FEM components) such as radio-frequency filter circuitry 44 (e.g., low pass filters, high pass filters, notch filters, band pass filters, multiplexing circuitry, duplexer circuitry, diplexer circuitry, triplexer circuitry, etc.), switching circuitry 46 (e.g., one or more radio-frequency switches), radio-frequency amplifier circuitry 48 (e.g., one or more power amplifier (PA) circuits 50 and/or one or more low-noise amplifier (LNA) circuits 52), impedance matching circuitry (e.g., circuitry that helps to match the impedance of antenna 42 to the impedance of radio-frequency transmission line path 36), antenna tuning circuitry (e.g., networks of capacitors, resistors, inductors, and/or switches that adjust the frequency response of antenna 42), radio-frequency coupler circuitry, charge pump circuitry, power management circuitry, digital control and interface circuitry, and/or any other desired circuitry that operates on the radio-frequency signals transmitted and/or received by antenna 42. Each of the front-end module components may be mounted to a common (shared) substrate such as a rigid printed circuit board substrate or flexible printed circuit substrate. If desired, the various front-end module components may also be integrated into a single integrated circuit chip.

Filter circuitry 44, switching circuitry 46, amplifier circuitry 48, and other circuitry may be disposed on or along radio-frequency transmission line path(s) 36, may be incorporated into FEM 40, and/or may be incorporated into antenna(s) 42 (e.g., to support antenna tuning, to support operation in desired frequency bands, etc.). These components, sometimes referred to herein as antenna tuning components, may be adjusted (e.g., using control circuitry 14) to adjust the frequency response and wireless performance of antenna(s) 42 over time.

Transceiver circuitry 28 may be separate from FEM 40. For example, transceiver circuitry 28 may be implemented as a dedicated integrated circuit chip (IC), system-on-chip (SOC), or package (e.g., a radio chip) that is different or separate from FEM 40 (e.g., that is not mounted to the substrate of FEM 40) or may be mounted to another substrate such as the main logic board of device 10, a rigid printed circuit board, or flexible printed circuit that is not a part of FEM 40. Although control circuitry 14 is shown separately from wireless circuitry 24 in the example of FIG. 1 for the sake of clarity, wireless circuitry 24 may include processing circuitry that forms a part of processing circuitry 18 and/or storage circuitry that forms a part of storage circuitry 16 of control circuitry 14 (e.g., portions of control circuitry 14 may be implemented on wireless circuitry 24). As an example, processing circuitry 26 and/or portions of transceiver circuitry 28 (e.g., a host processor, baseband circuitry in processing circuitry 26 and/or transceiver circuitry 28, digital signal processing circuitry, etc.) may form a part of control circuitry 14. Control circuitry 14 (e.g., portions of control circuitry 14 formed on processing circuitry 26, portions of control circuitry 14 formed on transceiver circuitry 28, and/or portions of control circuitry 14 that are separate from wireless circuitry 24) may provide control signals (e.g., over one or more control paths in device 10) that control the operation of FEM 40 and/or transceiver circuitry 28.

Transceiver circuitry 28 may include wireless local area network transceiver circuitry that handles WLAN communications bands (e.g., Wi-Fi^{®} (IEEE 802.11) or other WLAN communications bands) such as a 2.4 GHz WLAN band (e.g., from 2400 to 2480 MHz), a 5 GHz WLAN band (e.g., from 5180 to 5825 MHz), a Wi-Fi^{®} 6E band (e.g., from 5925-7125 MHz), and/or other Wi-Fi^{®} bands (e.g., from 1875-5160 MHz), a Wi-Fi^{®} 7 band, wireless personal area network (WPAN) transceiver circuitry that handles the 2.4 GHz Bluetooth^{®} band or other WPAN communications bands, cellular telephone transceiver circuitry that handles cellular telephone bands (e.g., bands from about 600 MHz to about 5 GHz, 3G bands, 4G LTE bands, 5G New Radio Frequency Range 1 (FR1) bands below 10 GHz, 5G New Radio Frequency Range 2 (FR2) bands between 20 and 60 GHz, 6G bands above 100 GHz, 6G bands such as sub-THz and/or THF bands between around 100 GHz and around 10 THz, etc.), near-field communications (NFC) transceiver circuitry that handles near-field communications bands (e.g., at 13.56 MHz), satellite navigation receiver circuitry that handles satellite navigation bands (e.g., a GPS band from 1565 to 1610 MHz, a Global Navigation Satellite System (GLONASS) band, a BeiDou Navigation Satellite System (BDS) band, etc.), ultra-wideband (UWB) transceiver circuitry that handles communications using the IEEE 802.15.4 protocol and/or other ultra-wideband communications protocols, and/or any other desired radio-frequency transceiver circuitry for covering any other desired communications bands of interest.

Wireless circuitry 24 may include one or more antennas such as antenna(s) 42. Antenna(s) 42 may be formed using any desired antenna structures. For example, an antenna 42 may be an antenna with a resonating element that is formed from loop antenna structures, patch antenna structures, inverted-F antenna structures, slot antenna structures, planar inverted-F antenna structures, helical antenna structures, monopole antennas, dipoles, hybrids of these designs, etc. Two or more antennas 42 may be arranged into one or more phased antenna arrays (e.g., for conveying radio-frequency signals at millimeter wave frequencies). Parasitic elements may be included in an antenna 42 to adjust antenna performance. An antenna 42 may be provided with a conductive cavity that backs the antenna resonating element of the antenna (e.g., antenna 42 may be a cavity-backed antenna such as a cavity-backed slot antenna).

It may be desirable to be able to measure radio-frequency signals that are transmitted by a transmitter 30 in wireless circuitry 24 over time. For example, measurements of a transmitted radio-frequency signal may be used to characterize, test, calibrate, and/or adjust one or more components in transmitter 30, FEM 40, and/or antenna(s) 42 over time (e.g., in a manner that optimizes or improves radio-frequency performance of the transmitter, FEM 40, and/or antenna(s) 42 given the current operating conditions of wireless circuitry 24 as measured from the transmitted radio-frequency signal, to decrease power consumption by wireless circuitry 24, etc.). For example, measurements of the transmitted radio-frequency signal may be used by transmitter 30 to perform digital-predistortion (DPD) on the transmitted radio-frequency signals, to adjust the transmit power level, gain, maximum transmit power level, and/or transmit power backoff of transmitter 30 (e.g., of amplifier circuitry in transmitter 30), to measure the impedance of antenna(s) 42 (e.g., for detecting the presence of external objects near antenna(s) 42, to detect changes in the loading of antenna(s) 42 over time, to adjust the maximum transmit power level of antenna(s) 42 to ensure that the antenna(s) maintain regulatory requirements on radio-frequency exposure (RFE) given the presence of living external objects near antenna(s) 42, to perform impedance matching adjustments to minimize signal reflections along radio-frequency transmission line path(s) 36, to measure the voltage standing wave ratio (VSWR) of antenna(s) 42, to adjust antenna tuning settings over time, etc.), and/or for performing any other desired operations.

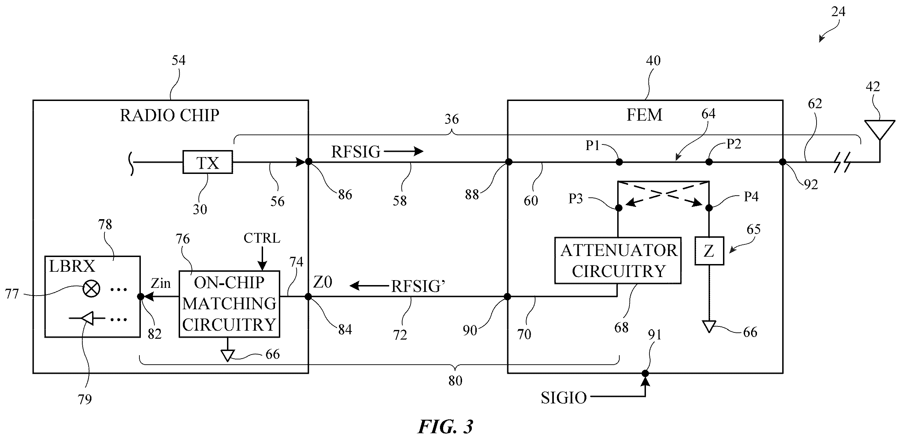

In implementations that are described herein as an example, wireless circuitry 24 may include a loopback receiver and a signal coupler that are used to perform these types of measurements or other measurements of the radio-frequency signals transmitted by transmitter 30. FIG. 3 is a circuit diagram showing one example of how wireless circuitry 24 may include a loopback receiver and a signal coupler for measuring radio-frequency signals transmitted by transmitter 30.

As shown in FIG. 3, wireless circuitry 24 may include a radio chip such as radio chip 54. Radio chip 54 (sometimes also referred to herein as modulator/demodulator (modem) chip 54, radio 54, or modem 54) may include a corresponding integrated circuit (e.g., a radio IC), SOC, or package that is separate from FEM 40 (e.g., radio chip 54 is external to FEM 40 and is not mounted to or integrated within FEM 40). Radio chip 54 may form part of transceiver circuitry 28 of FIG. 2. If desired, FEM 40 may be replaced with another radio chip in any of the implementations described herein (e.g., including mixer circuitry for converting signals transmitted by radio chip 54 between intermediate and radio frequencies). FEM 40 is communicatively coupled between radio chip 54 and antenna(s) 42.

Radio chip 54 may include at least one transmitter 30. If desired, radio chip 54 may also include one or more receivers (e.g., receiver 32 of FIG. 2), which have been omitted from FIG. 3 for the sake of clarity. A radio-frequency transmission line path 36 may communicatively couple the signal output of transmitter 30 to at least one antenna 42 (e.g., forming a signal path, a transmit path, a transmit signal path, or a transmit chain between transmitter 30 and antenna(s) 42). Antenna 42 of FIG. 3 may be a dedicated transmit antenna or may both transmit and receive radio-frequency signals. A first portion (segment) of radio-frequency transmission line path such as signal path 56 (e.g., one or more radio-frequency transmission lines) may couple the output of transmitter 30 to a radio-frequency signal port of radio chip 54 such as signal port 86. Signal port 86 is sometimes also referred to herein as radio-frequency transmit signal port 86, transmit signal port 86, or transmit port 86. Signal path 58 is sometimes also referred to herein as signal line 58. Signal port 86 may serve as a radio-frequency interface or interconnect between signal path 56 (e.g., a radio-frequency transmission line that is internal to radio chip 54) and a radio-frequency transmission line that is external to radio chip 54.

Radio-frequency transmission line path 36 may also include a second portion (segment) such as signal path 58. Signal path 58 is sometimes also referred to herein as signal line 58. Signal path 58 may include one or more radio-frequency transmission lines that are external to radio chip 54 and FEM 40. Signal port 86 may couple signal path 56 on radio chip 54 to signal path 58 outside of radio chip 54. Signal path 58 may couple signal port 86 of radio chip 54 to a radio-frequency signal port of FEM 40 such as signal port 88. Signal port 88 is sometimes also referred to herein as radio-frequency transmit signal port 88, transmit signal port 88, transmit port 88, or input signal port 88 of FEM 40. Signal port 88 may serve as a radio-frequency interface or interconnect between signal path 58 (e.g., a radio-frequency transmission line that is external to FEM 40) and a radio-frequency transmission line that is internal to FEM 40.

Radio-frequency transmission line path 36 may also include a third portion (segment) such as signal path 60. Signal path 60 is sometimes also referred to herein as signal line 60. Signal path 60 may include one or more radio-frequency transmission lines on (e.g., internal to) FEM 40. Signal path 60 may couple signal port 88 to another radio-frequency signal port of FEM 40 such as signal port 92. Signal port 92 is sometimes also referred to herein as radio-frequency transmit signal port 92, transmit signal port 92, transmit port 92, or output signal port 92 of FEM 40. Signal port 92 may serve as a radio-frequency interface or interconnect between signal path 60 (e.g., a radio-frequency transmission line that is internal to radio chip 54) and a radio-frequency transmission line that is external to FEM 40.

Radio-frequency transmission line path 36 may further include a fourth portion (segment) such as signal path 62. Signal path 62 is sometimes also referred to herein as signal line 62. Signal path 62 may include one or more radio-frequency transmission lines that are external to radio chip 54 and FEM 40. Signal port 92 may couple signal path 60 on FEM 40 to signal path 62 outside of FEM 40. Signal path 62 may couple signal port 92 of FEM 40 to antenna 42. If desired, one or more additional radio-frequency components, modules, and/or chips (not shown) may be disposed on signal path 62 between FEM 40 and antenna 42.

If desired, radio chip 54 may also include baseband circuitry (e.g., forming a part of processing circuitry 26 of FIG. 2) for transmitter 30. Additionally, or alternatively, some of the baseband circuitry for transmitter 30 may be external to radio chip 54 (e.g., on a baseband chip separate from radio chip 54). During signal transmission, the baseband circuitry may provide baseband signals to transmitter 30. Transmitter 30 may generate radio-frequency signals RFSIG based on the baseband signals (e.g., by performing digital-to-analog conversion on the baseband signal and by upconverting the baseband signal to a radio frequency). Amplifier circuitry in transmitter 30 (e.g., one or more power amplifiers (PAs), one or more transimpedance amplifiers, one or more gain stages, etc.) may amplify radio-frequency signals RFSIG, causing transmitter 30 to output radio-frequency signals RFSIG at a corresponding transmit (output) power level. Radio-frequency signals RFSIG are sometimes also referred to herein as transmit signals RFSIG.

Transmitter 30 may transmit radio-frequency signals RFSIG onto signal path 56. Signal path 56 may carry radio-frequency signals RFSIG to signal port 86. Signal port 86 may transmit radio-frequency signals RFSIG from signal path 56 onto signal path 58. Radio-frequency signals RFSIG may propagate down signal path 58 to FEM 40. Signal port 88 may transmit radio-frequency signals RFSIG from signal path 58 onto signal path 60. Signal path 60 may carry radio-frequency signals RFSIG from signal port 88 to signal port 92. Signal port 92 may transmit radio-frequency signals RFSIG from signal path 60 onto signal path 62. Signal path 62 may convey radio-frequency signals RFSIG from FEM 40 to antenna 42. Antenna 42 may radiate radio-frequency signals RFSIG.

The example of FIG. 3 illustrates only the transmission of radio-frequency signals RFSIG by antenna 42 for the sake of clarity. If desired, portions of radio-frequency transmission line path 36 may also convey radio-frequency signals received by antenna 42 (e.g., over-the-air) to one or more receivers in radio chip 54 and/or other radio chips in wireless circuitry 24. Radio-frequency signals received by antenna 42 are sometimes also referred to herein as receive signals. If desired, additional radio-frequency transmission line paths 36 (not shown) may be used to convey receive signals from antenna 42 to one or more receivers in wireless circuitry 24. If desired, radio chip 54, radio-frequency transmission line path 36, and/or FEM 40 may include switching circuitry and/or filter circuitry (not shown) that are used to direct transmit signals (e.g., radio-frequency signals RFSIG) to antenna 42 for transmission and to direct receive signals from antenna 42 to one or more receivers (e.g., while providing isolation between the transmit and receive signals, between the transmitters and receivers, etc.). If desired, antenna 42 of FIG. 3 may be implemented in a phased antenna array. If desired, FEM 40 may include additional components (e.g., PA(s) 50 of FIG. 2, switching circuitry, filter circuitry, mixer circuitry, etc.) disposed on signal path 60 and/or radio chip 54 may include additional components (e.g., PAs, switching circuitry, filter circuitry, etc.) disposed on signal path 56. However, these components are not depicted in FIG. 3 for the sake of clarity.

Wireless circuitry 24 may also include a loopback receiver and a signal coupler for measuring the radio-frequency signals RFSIG transmitted along radio-frequency transmission line path 54. For example, as shown in FIG. 3, radio chip 54 may include loopback receiver circuitry such as loopback receiver (LBRX) 78 and FEM 40 may include a signal coupler such as signal coupler 64. Loopback receiver 78 is sometimes also referred to herein as feedback receiver 78 or coupled signal receiver 78. Signal coupler 64 is disposed on and/or along signal path 60 of radio-frequency transmission line path 36 (e.g., signal coupler 64 may be interposed on radio-frequency transmission line path 36 between signal ports 88 and 92 of FEM 40). Wireless circuitry 24 may include a loopback path 80 that communicatively couples a terminal, node, or port of the signal coupler 64 on FEM 40 to a radio-frequency signal input such as signal port 82 of the loopback receiver 78 on radio chip 54. Signal port 82 is sometimes also referred to herein as radio-frequency signal port 82, radio-frequency input port 82, input port 82, signal port 82, or receive port 82 of loopback receiver 78. Loopback path 80 is sometimes also referred to herein as feedback path 80 or coupled signal path 80.

Signal coupler 64 may be a directional coupler (e.g., a directional switch coupler) or any other desired coupler that couples a portion of radio-frequency signals RFSIG off of radio-frequency transmission line path 36 and towards loopback receiver 78 (e.g., over loopback path 80). Signal coupler 64 may, for example, include a transmission line segment, stub, inductor, transformer, or other signal coupling structure that extends along a corresponding portion or segment of signal path 60. Some of the radio-frequency signals RFSIG propagating along signal path 60 may electromagnetically couple off of signal path 60 onto the transmission line segment, stub, inductor, transformer, or other signal coupling structure in signal coupler 64. Loopback path 78 may convey the portion of radio-frequency signals RFSIG that was coupled off of signal path 60 to loopback receiver 78, as loopback signals RFSIG' (sometimes also referred to herein as feedback signals RFSIG', coupled signals RFSIG', or a portion RFSIG' of the radio-frequency signals RFSIG on signal path 60 that was coupled off of signal path 60 by signal coupler 64). If desired, FEM 40 may include an input-output (I/O) port 91 that receives I/O signals SIGIO (e.g., digital FEM control signals, analog FEM control signals, power supply voltages, reference voltages, clocking signals, etc.). I/O signals SIGIO may, for example, control, set, configure, program, and/or adjust one or more components of FEM 40.

Loopback receiver 78 may receive loopback signals RFSIG' from loopback path 80 and may process the received loopback signals RFSIG' to measure (e.g., estimate, determine, identify, compute, calculate, generate, sense, etc.) one or more characteristics of the radio-frequency signals RFSIG propagating along signal path 60 (e.g., the signal or power wave of radio-frequency signals RFSIG at a corresponding reference plane between signal coupler 64 and antenna 42). Processing circuitry in device 10 may process the measured characteristic(s) to assess (e.g., estimate, characterize, identify, calculate, etc.) the radio-frequency performance of antenna 42, one or more radio-frequency components in transmitter 30, one or more radio-frequency components in FEM 40, and/or one or more other radio-frequency components along radio-frequency transmission line path 36. The processing circuitry may use the measured characteristic(s) and/or the corresponding assessed radio-frequency performance to perform one or more adjustments to transmitter 30, antenna 42, and/or other components along radio-frequency transmission line path 36 (e.g., calibration adjustments, adjustments that serve to improve the radio-frequency performance of wireless circuitry 24, adjustments that serve to ensure compliance with regulatory RFE limits by wireless circuitry 24, etc.).

Loopback receiver 78 may, for example, include mixer circuitry 77 that downconverts loopback signals RFSIG' from radio frequencies (e.g., the frequency of the transmitted radio-frequency signals RFSIG) to baseband or an intermediate frequency. Loopback receiver 78 may also include amplifier circuitry 79 (e.g., one or more low noise amplifiers such as one or more transimpedance amplifiers (TIAs)) that amplifies loopback signals RFSIG'. Loopback receiver 78 may also include analog-to-digital converter (ADC) circuitry that converts the received loopback signals RFSIG' from the analog domain to the digital domain. If desired, loopback receiver 78 and/or other circuitry on radio chip 54 (e.g., a digital signal processor) may perform digital processing on loopback signals RFSIG' in the digital domain. If desired, mixer circuitry 77 may be communicatively coupled between signal port 82 of loopback receiver 78 and the input of amplifier circuitry 79 (e.g., mixer circuitry 77 may have a first input coupled to signal port 82 and may have a second input that receives a clocking signal such as a reference or local oscillator signal). Amplifier circuitry 79 may be communicatively coupled between the output of mixer circuitry 77 and the input of ADC circuitry on loopback receiver 78. If desired, filter circuitry may be coupled between the input of the ADC circuitry and the output of amplifier circuitry 79. This example is illustrative and non-limiting. If desired, some or all of these components of loopback receiver 78 may be replaced with a power detector, a voltage detector, a current detector, and/or any other desired loopback receiver components.

As shown in the example of FIG. 3, signal coupler 64 may be a four-port directional switch coupler (e.g., forming part of a reflectometer in wireless circuitry 24). Signal coupler 64 may have a first port P1 and a second port P2 on signal path 60. Port P1 may communicatively couple signal coupler 64 to signal port 88 of FEM 40 (e.g., over a first portion of signal path 60). Port P2 may communicatively couple signal coupler 64 to signal port 92 of FEM 40 (e.g., over a second portion of signal path 60). Signal coupler 64 may also have a third port P3 and a fourth port P4 that are outside of signal path 60 (e.g., ports P3 and P4 are not disposed on signal path 60). Port P3 may be communicatively coupled to signal port 82 of loopback receiver 78 over a portion of loopback path 80. Port P3 represents the coupled node of signal coupler 64 and is therefore sometimes also referred to herein as coupled node P3. Port P4 may be coupled to a termination impedance such as termination 65 (e.g., an isolated node termination). Port P4 represents the isolated node of signal coupler 64 (e.g., the port/node isolated from the signal source formed by transmitter 30) and is therefore sometimes also referred to herein as isolated node P4. Termination 65 may couple port P4 to reference potential 66 (e.g., ground or another reference potential). Termination 65 is sometimes also referred to herein as isolated node termination 65. Termination 65 may include one or more resistive, capacitive, inductive, and/or switching components that configure the termination to exhibit a corresponding impedance Z.

In some implementations that are described herein as an example, signal coupler 64 may be a switch coupler having switching circuitry (not shown in FIG. 3 for the sake of clarity). During signal transmission, the radio-frequency signals RFSIG transmitted onto radio-frequency transmission line path 36 by transmitter 30 propagate down radio-frequency transmission line path 36 towards antenna 42. These signals are sometimes also referred to herein as forward wave (FW) signals. The switching circuitry of signal coupler 64 may have a first state in which the switching circuitry communicatively couples coupled node P3 to loopback receiver 78 (e.g., over loopback path 80) while the switching circuitry couples isolated node P4 to termination 65. In this first state, the loopback signals RFSIG' provided to loopback receiver 78 may correspond to FW signals. As such, loopback receiver 78 may perform FW signal measurements by receiving and processing (e.g., measuring) loopback signals RFSIG' while the switching circuitry in signal coupler 64 is in the first state. During signal transmission, some of the FW signals will reflect off of the output load of signal coupler 64 (e.g., antenna 42) and back towards signal coupler 64 (e.g., due to the impedance discontinuity between radio-frequency transmission line path 36 and the output load). These reflected signals are sometimes also referred to herein as reverse wave (RW) signals.

The switching circuitry of signal coupler 64 may also have a second state in which the switching circuitry couples coupled node P3 to coupled termination 65 while communicatively coupling isolated node P4 to loopback receiver 78 (e.g., over loopback path 80). In the second state, the loopback signals RFSIG' provided to loopback receiver 78 may correspond to RW signals. As such, loopback receiver 78 may perform RW signal measurements by receiving and processing (e.g., measuring) loopback signals RFSIG' while the switching circuitry in signal coupler 64 is in the second state. Control circuitry 14 (FIG. 1) may process the FW signal measurements and/or the RW signal measurements to characterize (e.g., identify, determine, detect, compute, calculate, measure, etc.) the impedance of the output load of signal coupler 64 (e.g., antenna 42), to identify the actual transmit power level of the radio-frequency signals RFSIG propagating along signal path 60 (e.g., which may be different from the transmit power level of the radio-frequency signals at the output of transmitter 30), and/or to identify other signal and/or circuit characteristics. Impedance measurements performed by the control circuitry using loopback receiver 78, loopback path 80, and signal coupler 64 may, for example, include complex impedance measurements, complex scattering parameter measurements (e.g., S-parameter measurements such as S11 associated with signal reflection, etc.), VSWR measurements, etc. Control circuitry 14 may use some or all of this information to perform one or more adjustments to signal transmission, components along radio-frequency transmission line path 36, antenna 42, components within transmitter 30, etc. This example is illustrative and non-limiting and, in general, signal coupler 64 may be any type of radio-frequency signal coupler.

Loopback path 80 may have a first portion (segment) such as loopback signal path 70. Loopback signal path 70 is sometimes also referred to herein as loopback signal line 70, signal path 70, signal line 70, feedback signal path 70, feedback signal line 70, coupled signal path 70, or coupled signal line 70. Loopback signal path 70 may include one or more radio-frequency transmission lines on and/or in FEM 40. Loopback signal path 70 may couple the coupled node P3 of signal coupler 64 to an output signal port of FEM 40 such as loopback signal port 90. Loopback signal port 90 is sometimes also referred to herein as loopback signal output port 90, coupled signal (output) port 90, or feedback signal (output) port 90 of FEM 40. Loopback signal port 88 may serve as a radio-frequency interface or interconnect between loopback signal path 70 and a radio-frequency transmission line that is external to FEM 40.

Loopback path 80 may also include a second portion (segment) such as loopback signal path 72. Loopback signal path 72 is sometimes also referred to herein as loopback signal line 72, signal path 72, signal line 72, feedback signal path 72, feedback signal line 72, coupled signal path 72, or coupled signal line 72. Loopback signal path 72 may include one or more radio-frequency transmission lines that are external to radio chip 54 and FEM 40. Loopback signal port 90 may couple loopback signal path 70 on FEM 40 to loopback signal path 72 outside of FEM 40. Loopback signal path 72 may couple loopback signal port 90 of FEM 40 to a radio-frequency signal (receive) port of radio chip 54 such as loopback signal port 84. Loopback signal port 84 is sometimes also referred to herein as loopback signal input port 84, coupled signal (input) port 84, or feedback signal (input) port 84 of radio chip 54. Loopback signal port 84 may serve as a radio-frequency interface or interconnect between loopback signal path 72 (e.g., a radio-frequency transmission line that is external to radio chip 54) and a radio-frequency transmission line that is internal to radio chip 54. If desired, loopback signal path 72 and signal path 58 of radio-frequency transmission line 36 may both be integrated into and/or mounted to a corresponding substrate (e.g., a flexible printed circuit, a rigid printed circuit board, etc.) that is coupled between radio chip 54 and FEM 40.

Loopback path 80 may also include a third portion (segment) such as loopback signal path 74. Loopback signal path 74 is sometimes also referred to herein as loopback signal line 74, signal path 74, signal line 74, feedback signal path 74, feedback signal line 74, coupled signal path 74, or coupled signal line 74. Loopback signal path 74 may include one or more radio-frequency transmission lines on (e.g., internal to) radio chip 54. Loopback signal path 74 may couple loopback signal port 84 to the signal port (input) 82 of loopback receiver 78. Signal ports 86, 88, 90, and 84 may include radio-frequency connectors (e.g., coaxial connectors, micro-coaxial connectors, spring-based connectors, clip-based connectors, pogo-pin based connectors, etc.), radio-frequency contact pads, solder, and/or any other desired radio-frequency interconnects.

If desired, loopback path 80 may include signal attenuation circuitry such as attenuator circuitry 68 disposed on loopback signal path 70 between coupled node P3 of signal coupler 64 and loopback signal port 90. Attenuator circuitry 68 may include one or more radio-frequency signal attenuators (e.g., resistive networks). Attenuator circuitry 68 may attenuate the portion of radio-frequency signals RFSIG that are coupled off of signal path 60 and onto loopback signal path 70 via coupled node P3 of signal coupler 64, outputting loopback signals RFSIG' at a desired signal (e.g., voltage or power) level. This may, for example, help to provide loopback signals RFSIG' at a desired signal magnitude suitable for measurement at loopback receiver 78 regardless of the transmit power level of the radio-frequency signals RFSIG propagating along signal path 60. In some implementations, attenuator circuitry 68 may include one or more fixed attenuators that provide a fixed (constant) attenuation level to the loopback signals over time (e.g., attenuator circuitry 68 may be fixed or non-adjustable attenuator circuitry). In other implementations, attenuator circuitry 68 may include one or more adjustable (e.g., programmable, reconfigurable, etc.) attenuators that provide an adjustable (e.g., switched) attenuation level to the loopback signals over time (e.g., attenuator circuitry 68 may be adjustable, programmable, and/or switchable attenuator circuitry).

If desired, radio chip 54 may include on-chip impedance matching circuitry for loopback receiver 78 such as on-chip matching circuitry 76. On-chip matching circuitry 76 may be disposed on and/or coupled to loopback signal path 74 between loopback signal port 84 and the signal port 82 of loopback receiver 78. On-chip matching circuitry 76 may, for example, form an input matching network (MN) for loopback receiver 78. On-chip matching circuitry 76 may, if desired, be coupled between loopback signal path 74 and reference potential 66 (e.g., may couple one or more nodes along loopback signal path 74 to reference potential 66 via impedances such as resistances, capacitances, and/or inductances). In some implementations, on-chip matching circuitry 76 may be fixed (e.g., non-adjustable) matching circuitry that includes fixed (e.g., non-adjustable) circuit components (e.g., fixed resistors, capacitors, inductors, etc.). In other implementations, on-chip matching circuitry 76 may include adjustable (e.g., programmable, reconfigurable, etc.) matching circuitry that includes adjustable circuit components (e.g., adjustable or tunable resistors, capacitors, inductors, etc.). For example, on-chip matching circuitry 76 may include switching circuitry that receives a control signal CTRL (e.g., from baseband circuitry of radio chip 54, control circuitry 14 of FIG. 1, etc.) that places the switching circuitry in a desired switch state and that controls the switching circuitry to switch between different switch states over time (e.g., to adjust the amount of impedance matching performed by on-chip matching circuitry 76 over time).

On-chip matching circuitry 76 perform input impedance matching between the input of loopback receiver 78 and loopback path 80 (e.g., loopback signal path 74, loopback signal port 84, and/or loopback signal path 72). This may, for example, help to minimize reflections of loopback signals RFSIG' at signal port 82 of loopback receiver 78, which can help to increase the efficiency and performance of loopback receiver 78 in measuring radio-frequency signals RFSIG. For example, loopback signal path 74, loopback signal port 84, and/or loopback signal path 72 may exhibit a nominal impedance Z0 (e.g., 50 Ohms or another impedance). Loopback receiver 78 may exhibit a corresponding input impedance Zin. On-chip matching circuitry 76 may help to match the input impedance Zin of loopback receiver 78 to impedance Z0. If desired, control signal CTRL may adjust on-chip matching circuitry 76 based on one or more characteristics of the radio-frequency signals RFSIG transmitted by transmitter 30 (e.g., on-chip matching circuitry 76 may set and/or adjust input impedance Zin based on the characteristic(s) of radio-frequency signals RFSIG).

In practice, the transmit power level of transmitter 30 and radio-frequency signals RFSIG can be very high. As such, loopback receiver 78 may need to be able to achieve at least a certain linearity level in receiving loopback signals RFSIG' while the transmit power level of radio-frequency signals RFSIG is relatively high. However, at other times, transmitter 30 may transmit radio-frequency signals RFSIG at very low transmit power levels (e.g., to satisfy regulations on RFE, to prevent saturation at a receiver of the transmitted radio-frequency signals, etc.). As such, loopback receiver 78 may also need to be able to maintain at least a minimum threshold signal-to-noise ratio (SNR) in receiving loopback signals RFSIG' while the transmit power of radio-frequency signals RFSIG is relatively low (e.g., while the PA in transmitter 30 is operating with a non-zero transmit power level backoff). In other words, because the dynamic range of the transmitted radio-frequency signals RFSIG and thus loopback signals RFSIG' can be very large, if care is not taken, it can be difficult for loopback receiver 78 to exhibit sufficiently high SNR while the power level of the PA in transmitter 30 is relatively low while also being able to achieve a sufficiently high linearity while the power level of the PA in transmitter 30 is relatively high.

In practice, implementing both on-chip matching circuitry 76 as a fixed matching network and attenuator circuitry 68 as fixed attenuator circuitry can limit the dynamic range of loopback receiver 78, preventing loopback receiver 78 from being able to exhibit sufficient levels of performance across the entire range of transmit power levels of transmitter 30 and radio-frequency signals RFSIG. In some implementations that are described herein as an example, control signal CTRL may adjust on-chip matching circuitry 76 (e.g., based on the transmit power level of transmitter 30 and radio-frequency signals RFSIG) to effectively extend the dynamic range of loopback receiver 78 while receiving loopback signals RFSIG'. This may include, for example, controlling on-chip matching circuitry 76 to intentionally introduce impedance mismatches between loopback receiver 78 (e.g., input impedance Zin) and loopback path 80 (e.g., impedance Z0) for at least some of the transmit power levels of transmitter 30 and radio-frequency signals RFSIG. The impedance mismatch(es) may, for example, help to increase the SNR of loopback receiver 78 while the transmit power level of radio-frequency signals RFSIG is relatively low and/or may help to increase the linearity of loopback receiver 78 while the transmit power level of radio-frequency signals RFSIG is relatively high.

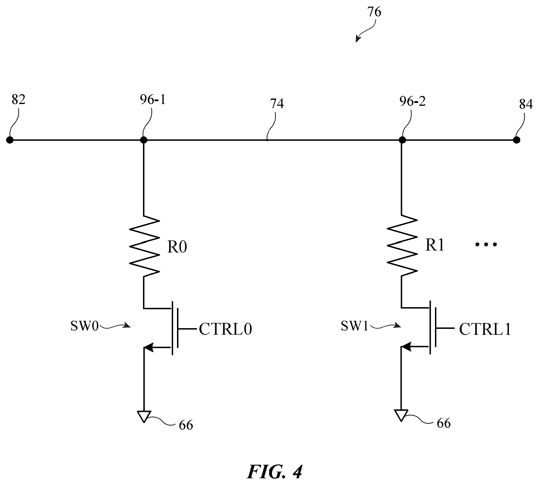

In these implementations, on-chip matching circuitry 76 may include switching circuitry that switches on-chip matching circuitry 76 between at least three different operating modes and impedances. FIG. 4 is a circuit diagram showing one example of how on-chip matching circuitry 76 may include switching circuitry for switching between at least three different impedances. As shown in FIG. 4, on-chip matching circuitry 76 may include a set of two or more resistors R coupled in series with corresponding switches SW between respective circuit nodes 96 on loopback signal path 74 and reference potential 66. For example, on-chip matching circuitry 76 may include a first resistor R0 coupled in series with a first switch SW0 between a first node 96-1 on loopback signal path 74 and reference potential 66. On-chip matching circuitry 76 may also include a second resistor R1 coupled in series with a second switch SW1 between a second node 96-2 on loopback signal path 74 and reference potential 66. Resistor R0 may have a larger resistance than resistor R1. Node 96-2 may be interposed on loopback signal path 74 between node 96-1 and loopback signal port 84. Alternatively, node 96-1 may be interposed on loopback signal path 74 between node 96-2 and loopback signal port 84. Alternatively, resistors R0 and R1 may be coupled to the same node 96 on loopback signal path 74.

The example of FIG. 4 is illustrative and non-limiting and, in general, the switching circuitry of on-chip matching circuitry 76 may be implemented using any desired switches, switch networks, etc. If desired, on-chip matching circuitry 76 may include a set of N resistors R (e.g., having different resistances) coupled in series with a set of N switches SW between loopback signal path 74 (e.g., N respective nodes 96) and reference potential 66, where N is any desired integer greater than one (e.g., N = 2, 3, 4, 5, 1-16, 8-32, 1-128, etc.). In practice, increasing the size of integer N may increase the number of different impedances that on-chip matching circuitry 76 is switched between. In general, on-chip matching circuitry 76 may include any desired resistive, capacitive, and/or inductive components disposed on loopback signal path 74 and/or coupled between loopback signal path 74 and reference potential 66 in any desired manner.

In a simplest example, each switch SW may be a single-pole single-throw (SPST) switch implemented using a corresponding transistor. For example, as shown in FIG. 4, switch SW0 may include a first transistor having a first source-drain terminal coupled to resistor R0 and having a second source-drain terminal coupled to reference potential 66. Similarly, switch SW1 may include a second transistor having a first source-drain terminal coupled to resistor R1 and having a second source-drain terminal coupled to reference potential 66. Each switch SW may receive a respective control signal CTRL (e.g., an analog control voltage or a different respective bit of a digital control signal) that adjusts the switch state of that switch SW (e.g., between an open state and a closed state). For example, the transistor used to form each switch SW may include a gate terminal that receives a respective control signal CTRL (e.g., the gate terminal of switch SW0 may receive a first control signal CTRL0 while the gate terminal of switch SW1 receives a second control signal CTRL1). Control signals CTRL0 and CTRL1 may be respective analog control voltages or may be respective bits of a digital control signal.

The terms "source" and "drain" terminals used to refer to current-conveying terminals in a transistor may be used interchangeably and are sometimes referred to as "source-drain" terminals. Thus, the source terminal of the first transistor can thus sometimes be referred to as a first source-drain terminal, and the drain terminal of the first transistor can be referred to as a second source-drain terminal (or vice versa). Switch control voltages may be applied to gate terminals of the transistors to control the switch states (modes) of the switches (e.g., to activate or deactivate the switches). The term "activate" with respect to a switch (or transistor) may refer to or be defined herein as an action that places the switch in an "on" or low-impedance state such that the two source-drain terminals of the switch are electrically connected to conduct current (e.g., exhibiting less than a threshold impedance or higher than a threshold transconductance between the two source-drain terminals). Activating a switch can sometimes be referred to as turning on, enabling, or closing a switch (e.g., an active switch is sometimes also referred to herein as an on switch, an enabled switch, or a closed switch). The term "deactivate" with respect to a switch (or transistor) may refer to or be defined herein as an action that places the switch in an "off" or high-impedance state such that the two source-drain terminals of the switch/transistor are electrically disconnected with minimal leakage current (e.g., exhibiting higher than a threshold impedance or less than a threshold transconductance between the two source-drain terminals). Deactivating a switch can sometimes be referred to as turning off, disabling, or opening a switch (e.g., a deactivated switch is sometimes also referred to herein as an off switch, a disabled switch, or an open switch).

Control signal CTRL0 may selectively open and close switch SW0 to couple or decouple resistor R0 between loopback signal path 74 and reference potential 66. For example, when switch SW0 is closed, resistor R0 forms a shunt resistance that is coupled between node 96-1 on loopback signal path 74 and reference potential 66. When switch SW0 is open, resistor R0 is decoupled from signal path 74 and does not form a shunt resistance for loopback signal path 74 (e.g., due to an open circuit formed by switch SW0 between resistor R0 and reference potential 66. At the same time, control signal CTRL1 may selectively open and close switch SW1 to couple or decouple resistor R1 between loopback signal path 74 and reference potential 66. For example, when switch SW1 is closed, resistor R1 forms a shunt resistance that is coupled between node 96-2 on loopback signal path 74 and reference potential 66. When switch SW1 is open, resistor R1 is decoupled from signal path 74 and does not form a shunt resistance for loopback signal path 74 (e.g., due to an open circuit formed by switch SW1 between resistor R1 and reference potential 66). Adjusting the switch state of switches SW1 and SW2 (e.g., selectively coupling resistors R0 and/or R1 to loopback signal path 74) may serve to adjust the input impedance Zin of loopback receiver 78 and thus the impedance matching performed by on-chip matching circuitry 76 over time (e.g., to control on-chip matching circuitry 76 to either match input impedance Zin of loopback receiver 78 to impedance Z0 of loopback path 80 or to intentionally mismatch input impedance Zin and impedance Z0).

Switches SW0 and SW1 may collectively form switching circuitry that exhibits three different switch states for configuring on-chip impedance matching circuitry 76 to switch on-chip matching circuitry 76, loopback receiver 78, and/or radio chip 54 between three different operating modes. On-chip matching circuitry 76 performs a different amount of impedance matching in each operating mode (e.g., configures input impedance Zin to have a different respective value in each operating mode). FIG. 4 is a state diagram illustrating three different operating modes of on-chip matching circuitry 76, loopback receiver 78, and/or radio chip 54.

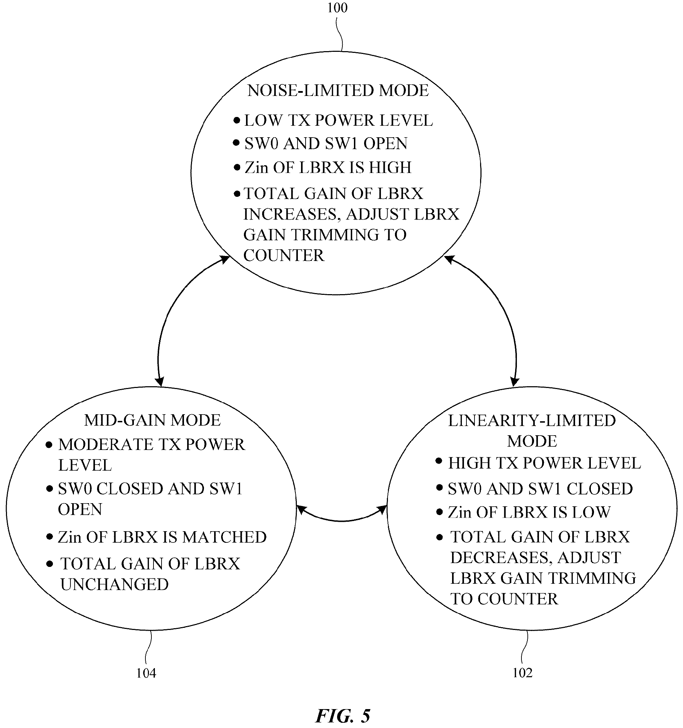

As shown in FIG. 5, on-chip matching circuitry 76, loopback receiver 78, and/or radio chip 54 may be operable in at least a noise-limited mode 100 (sometimes also referred to herein as noise-limited state 100 or noise-limited condition 100), a linearity-limited mode 102 (sometimes also referred to herein as linearity-limited state 102 or linearity-limited condition 102), and a mid-gain mode 104 (sometimes also referred to herein as mid-gain state 104 or mid-gain condition 104). Control signal CTRL may adjust the switches SW in on-chip matching circuitry 76 (e.g., based on the current transmit power level of radio-frequency signals RFSIG) to switch between noise-limited mode 100, linearity-limited mode 102, and mid-gain mode 104 over time (e.g., the switching circuitry in on-chip matching circuitry 76 may be in a different respective switch state in each of modes 100-104).

In noise-limited mode 100, transmitter 30 transmits radio-frequency signals RFSIG on radio-frequency transmission line path 36 at relatively low transmit power levels (e.g., less than a first threshold transmit power level). The relatively low transmit power level of radio-frequency signals RFSIG causes the corresponding loopback signals RFSIG' to be provided to loopback receiver 78 at a relatively low received power level. If care is not taken, the relatively low received power level of loopback signals RFSIG' may cause the loopback receiver 78 to exhibit relatively low SNR in receiving the loopback signals. This can cause noise in the loopback signals to be a limiting factor for the radio-frequency performance of loopback receiver 78 in receiving, measuring, and/or processing the loopback signals.

To help mitigate these issues and increase the SNR of loopback receiver 78, control signal CTRL may place the switching circuitry of on-chip matching circuitry 76 in a first switch state. In the first switch state, both switches SW0 and SW1 are open (e.g., forming open circuit impedances between loopback signal path 74 and reference potential 66), which decouples the both resistors R0 and R1 from loopback signal path 74 (e.g., preventing resistors R0 and R1 from contributing their respective shunt resistances to input impedance Zin). Decoupling both resistors R0 and R1 from loopback signal path 74 in this way may introduce a first amount of intentional non-zero impedance mismatch between the input impedance Zin of loopback receiver 78 and the impedance Z0 of loopback path 80 (e.g., on-chip matching circuitry 76 does not match the impedance Z0 of loopback path 80 to the input impedance Zin of loopback receiver 78).

For example, decoupling the shunt resistances of both resistors R0 and R1 from loopback signal path 74 may cause input impedance Zin to be relatively high (e.g., higher than the impedance Z0 of loopback path 80). The relatively high input impedance Zin of loopback receiver 78 (e.g., an input impedance that exceeds impedance Z0) may serve to increase the voltage swing from loopback signals RFSIG' at signal port 82 of loopback receiver 78. The increased voltage swing may increase the SNR of loopback receiver 78, helping to ensure that the loopback receiver is able to accurately and reliably measure the loopback signals despite the low transmit power level of transmitter 30. The increased voltage swing may also serve to increase the total gain of loopback receiver 78. One or more gain stages in amplifier circuitry 79 of loopback receiver 78 may be adjusted (trimmed) to reduce the gain of amplifier circuitry 79 to help counteract or reduce the increase in total gain (e.g., to restore an end-to-end gain to a nominal level). This process is sometimes also referred to as performing gain trimming at loopback receiver 78. As one example, amplifier circuitry 79 may include a first TIA and a second TIA, where the first TIA is coupled in series between on-chip matching circuitry 76 and the second TIA. In this example, the gain of the second TIA may be trimmed (e.g., decreased) to mitigate the increase in total gain of loopback receiver 78 caused by the relatively high input impedance Zin set by on-chip matching circuitry 76.

In linearity-limited mode 102, transmitter 30 transmits radio-frequency signals RFSIG on radio-frequency transmission line path 36 at relatively high transmit power levels (e.g., greater than a second threshold transmit power level, where the second threshold transmit power level is greater than or equal to the first threshold transmit power level). The relatively high transmit power level of radio-frequency signals RFSIG causes the corresponding loopback signals RFSIG' to be provided to loopback receiver 78 at a relatively high received power level. If care is not taken, the relatively high received power level of loopback signals RFSIG' may cause the loopback receiver 78 to exhibit relatively low linearity in receiving the loopback signals. This can cause linearity to be a limiting factor for the radio-frequency performance of loopback receiver 78 in receiving, measuring, and/or processing the loopback signals.

To help mitigate these issues and increase the linearity of loopback receiver 78, control signal CTRL may place the switching circuitry of on-chip matching circuitry 76 in a second switch state. In the second switch state, both switch SW0 and SW1 are closed, which couples both the shunt resistances of both resistors R0 and R1 to loopback signal path 74 (e.g., causing both resistors R0 and R1 to contribute their shunt resistances to input impedance Zin). Coupling both resistors R0 and R1 to loopback signal path 74 may introduce a second amount of intentional non-zero impedance mismatch between the input impedance Zin of loopback receiver 78 and the impedance Z0 of loopback path 80 (e.g., on-chip matching circuitry 76 does not match the impedance Z0 of loopback path 80 to the input impedance Zin of loopback receiver 78).

For example, coupling the shunt resistances of both resistors R0 and R1 to loopback signal path 74 may cause input impedance Zin to be relatively low (e.g., lower than the impedance Z0 of loopback path 80). The relatively low input impedance Zin of loopback receiver 78 (e.g., an input impedance that is less than impedance Z0) may serve to relax the linearity requirement of loopback receiver 78, helping to ensure that the loopback receiver is able to accurately and reliably measure the loopback signals despite the high transmit power level of transmitter 30. This may also serve to decrease the total gain of loopback receiver 78. One or more gain stages in amplifier circuitry 79 of loopback receiver 78 may be adjusted (trimmed) to increase the gain of amplifier circuitry 79 in a manner that helps counteract or reduce the decrease in total gain (e.g., to restore an end-to-end gain to a nominal level). In the example where amplifier circuitry 79 includes the first TIA and the second TIA, the gain of the second TIA may be trimmed (e.g., increased) to mitigate the decrease in total gain of loopback receiver 78 caused by the relatively low input impedance Zin set by on-chip matching circuitry 76.

In mid-gain mode 104, transmitter 30 transmits radio-frequency signals RFSIG on radio-frequency transmission line path 36 at intermediate, moderate, or medium transmit power levels (e.g., greater than the first threshold transmit power level and less than the second threshold transmit power level). The moderate transmit power level of radio-frequency signals RFSIG causes the corresponding loopback signals RFSIG' to be provided to loopback receiver 78 at a moderate received power level. In this transmit power level regime, loopback receiver 78 is not at risk of becoming SNR-limited or linearity-limited. As such, control signal CTRL may place the switching circuitry of on-chip matching circuitry 76 in a third switch state in which switch SW0 is closed while switch SW1 is open. This couples the shunt resistance of resistor R0 to loopback signal path 74 (e.g., causing the shunt resistance of resistor R0 to contribute to input impedance Zin) while decoupling the shunt resistance of resistor R1 from loopback signal path 74 (e.g., such that the shunt resistance of resistor R1 does not contribute to input impedance Zin). This may serve to match the input impedance Zin of loopback receiver 78 to the impedance Z0 of loopback path 80 (e.g., on-chip matching circuitry 76 sets Zin = Z0). As on-chip matching circuitry 76 presents a matched or nearly-matched load to the input of loopback receiver 78, there is no impact to the total gain of loopback receiver 78 and gain trimming may be omitted while operating in mid-gain mode 104.

Control circuitry 14 (FIG. 1) may use control signal CTRL to switch wireless circuitry 24 between noise-limited mode 100, linearity-limited mode 102, and mid-gain mode 104 over time based on one or more characteristics of transmitter 30 (e.g., settings of components in transmitter 30 such as one or more PAs in transmitter) and/or the radio-frequency signals RFSIG transmitted by transmitter 30. For example, control circuitry 14 may set wireless circuitry 24 into one of modes 100-104 that is selected based on the transmit power level of transmitter 30 and radio-frequency signals RFSIG. For example, control circuitry 14 may place wireless circuitry 24 in noise-limited mode 100 if/when (e.g., in response to) the transmit power level of radio-frequency signals RFSIG being below a first threshold THA. Control circuitry 14 may place wireless circuitry 24 in noise-limited mode 102 if/when (e.g., in response to) the transmit power level of radio-frequency signals RFSIG being above a second threshold THB. Control circuitry 14 may place wireless circuitry 24 in mid-gain mode 104 if/when (e.g., in response to) the transmit power level of radio-frequency signals RFSIG being above first threshold THA and below second threshold THB.

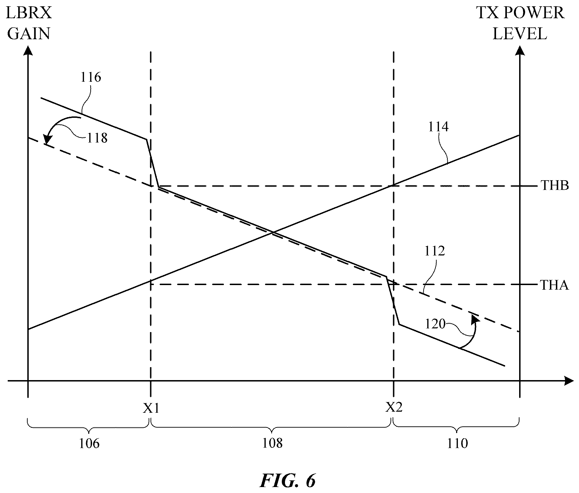

FIG. 6 is a plot illustrating the operation of loopback receiver 78 and transmitter 30 in operating modes 100-104 of FIG. 5. Curve 114 of FIG. 6 plots the transmit power level of transmitter 30 as a function of gain setting of loopback receiver 78. Curves 112 and 116 of FIG. 6 plot the gain of loopback receiver 78 as a function of the gain setting of loopback receiver 78 (e.g., of the amplifier circuitry 79 in loopback receiver 78). Curve 112 represents the nominal (e.g., ideal) gain curve of loopback receiver 78 (e.g., a linear gain curve) and is sometimes also referred to herein as nominal gain curve 112. Each point on curve 116 represents the actual gain of loopback receiver 78 while receiving loopback signals RFSIG' corresponding to radio-frequency signals RFSIG that are transmitted at the transmit power level of the corresponding (overlapping) point on curve 114.

As shown by curve 114, loopback receiver 78 may be set with relatively low gain settings (e.g., less than a threshold gain X1) while transmitter 30 transmits radio-frequency signals RFSIG at relatively low transmit power levels (e.g., transmit power levels less than first threshold THA). This may represent a noise-limited region 106 of loopback receiver 78. Control circuitry 14 may place wireless circuitry 24 (e.g., on-chip matching circuitry 76, loopback receiver 78, and/or transmitter 30) in noise-limited mode 100 while loopback receiver 78 is operating in noise-limited region 106. For example, if/when the transmit power level of transmitter 30 is less than first threshold THA, control circuitry 14 may place the switching circuitry in on-chip matching circuitry 76 in the first switch state (e.g., opening both switches SW0 and SW1 of FIG. 4), which increases input impedance Zin above impedance Z0 to increase the input voltage swing at loopback receiver 78 and thus SNR. This also causes the total gain of loopback receiver 78 to diverge (e.g., increase) away from nominal gain curve 112. As shown by arrow 118, adjusting one or more gain stages in amplifier circuitry 79 of loopback receiver 78 (e.g., decreasing the gain of amplifier circuitry 79) may serve to trim the total gain of loopback receiver 78 back down towards nominal gain curve 112 while operating in noise-limited region 106.

As also shown by curve 114, loopback receiver 78 may be set with relatively high gain settings (e.g., greater than a threshold gain X2 that is higher than threshold gain X1) while transmitter 30 transmits radio-frequency signals RFSIG at relatively high transmit power levels (e.g., transmit power levels exceeding second threshold THB). This may represent a linearity-limited region 110 of loopback receiver 78. Control circuitry 14 may place wireless circuitry 24 in linearity-limited mode 102 while loopback receiver 78 is operating in linearity-limited region 110. For example, if/when the transmit power level of transmitter 30 is greater than second threshold THB, control circuitry 14 may place the switching circuitry in on-chip matching circuitry 76 in the second switch state (e.g., closing both switches SW0 and SW1 of FIG. 4), which decreases input impedance Zin below impedance Z0 (e.g., to decrease the input voltage swing at loopback receiver 78 and relax linearity requirements for loopback receiver 78). This also causes the total gain of loopback receiver 78 to diverge (e.g., decrease) away from nominal gain curve 112. As shown by arrow 120, adjusting one or more gain stages in amplifier circuitry 79 of loopback receiver 78 (e.g., increasing the gain of amplifier circuitry 79) may serve to trim the total gain of loopback receiver 78 back up towards nominal gain curve 112 while operating in linearity-limited region 110. Loopback receiver 78 may also operate in a mid-gain region 108 at gain settings between threshold gain X1 and threshold gain X2. The total gain of loopback receiver 78 need not be trimmed while operating in mid-gain region 108 (e.g., because curve 116 matches nominal gain curve 112 in mid-gain region 108). The example of FIG. 6 is illustrative and non-limiting. Curves 112, 114, and 116 may have other shapes in practice.

In implementations where on-chip matching circuitry 76 is adjusted in this way to increase the dynamic range of loopback receiver 78, the attenuator circuitry 68 on FEM 40 may, if desired, include fixed attenuator circuitry that provides a fixed (constant) attenuation level to loopback signals RFSIG'. In other implementations, the attenuator circuitry 68 on FEM 40 may include adjustable attenuator circuitry that provides an adjustable (varying) attenuation level to loopback signals RFSIG' to effectively extend the dynamic range of loopback receiver 78. The attenuation level of the adjustable attenuator circuitry may be adjusted over time to increase the effective dynamic range of loopback receiver 78 (e.g., instead of adjusting on-chip matching circuitry 76 or in addition to adjusting on-chip matching circuitry 76). In implementations where attenuator circuitry 68 is implemented as adjustable attenuator circuitry, on-chip matching circuitry 76 may be adjustable (e.g., may adjust input impedance Zin over time as shown in FIGS. 4-6) or may be fixed (e.g., may provide a constant amount of impedance matching, such that input impedance Zin remains constant over time).

The adjustable attenuator circuitry in attenuator circuitry 68 may be controlled to adjust/vary the attenuation level applied to loopback signals RFSIG' over time. The adjustable attenuator circuitry may, for example, be switchable between modes 100-104 of FIG. 5 (e.g., based on the transmit power level of radio-frequency signals RFSIG) to optimize the performance of loopback receiver 78 similar to as described above in connection with on-chip matching circuitry 76. For example, the adjustable attenuator circuitry may apply a first attenuation level in noise-limited mode 100 (e.g., setting the adjustable attenuator to apply the first attenuation level may place the adjustable attenuator and loopback receiver 78 in noise-limited mode 100) and may apply a second attenuation level that is higher than the first attenuation level in linearity-limited mode 102 (e.g., setting the adjustable attenuator to apply the second attenuation level may place the adjustable attenuator and loopback receiver 78 in linearity-limited mode 102). If desired, the adjustable attenuator may apply a third attenuation level that is higher than the first attenuation level but lower than the second attenuation level in mid-gain mode 104 (e.g., setting the adjustable attenuator to apply the third attenuation level may place the adjustable attenuator and loopback receiver 78 in mid-gain mode 104). These attenuation level adjustments may be performed instead of impedance adjustments at on-chip matching circuitry 76 or may be performed in addition to impedance adjustments at on-chip matching circuitry in each mode. Put differently, wireless circuitry 24 may effectively extend the dynamic range of loopback receiver 78 for different transmit power levels of radio-frequency signals RFSIG by adjusting the impedance matching performed by on-chip matching circuitry 76 (e.g., without adjusting attenuator circuitry 68), by adjusting the attenuation level of attenuator circuitry 68 (e.g., without adjusting on-chip matching circuitry 76), or by adjusting both the impedance matching performed by on-chip matching circuitry 76 and the attenuation level of attenuator circuitry 68.

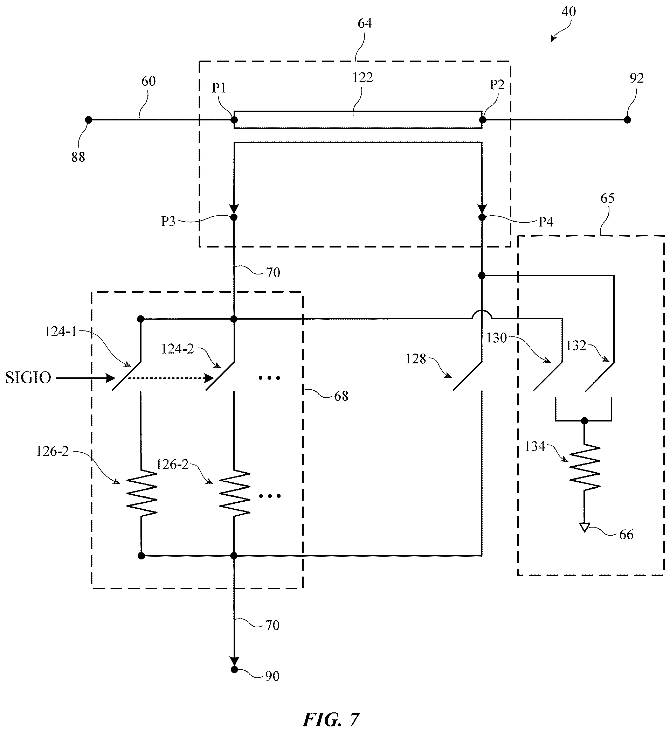

FIG. 7 is a circuit diagram showing one example of how attenuator circuitry 68 may include adjustable attenuator circuitry for extending the dynamic range of loopback receiver 78. As shown in FIG. 7, signal coupler 64 may be coupled to, disposed along, and/or coextensive with a segment 122 of the signal path 60 on FEM 40. Signal coupler 64 may couple a portion of the radio-frequency signals RFSIG propagating along signal path 60 off of segment 122 and onto coupled node P3 and/or isolated node P4 (e.g., depending on the state of switching circuitry for signal coupler 64). Coupled node P3 may be coupled to loopback signal port 90 of FEM 40 by loopback signal path 70. Attenuator circuitry 68 may be disposed on loopback signal path 70.

Isolated node P4 of signal coupler 64 may be coupled to termination 65. Termination 65 may include a termination impedance 134 coupled to reference potential 66 (modeled as a resistor in FIG. 7 for the sake of simplicity). If desired, termination impedance 134 may be a switchable impedance. For example, termination impedance 134 may include a switch 132 that is coupled in series between isolated node P4 and termination impedance 134. Switch 132 may be opened to decouple isolated node P4 from termination 65. Switch 132 may be closed to couple isolated node P4 to termination 65. Isolated node P4 may also be communicatively coupled to loopback signal port 90 by switch 128. Switch 128 may be opened to decouple isolated node P4 from loopback signal path 70 and loopback signal port 90. Switch 128 may be closed to couple isolated node P4 to loopback signal path 70 and loopback signal port 90. Switch 128 and/or switch 132 may be omitted if desired. Termination impedance 134 may itself be fixed or adjustable.

Attenuator circuitry 68 may include a set of two or more resistors 126 coupled in series with respective switches 124 between coupled node P3 and loopback signal port 90. In a simplest example, shown in FIG. 7, attenuator circuitry 68 may include a first resistor 126-1 (e.g., a first attenuating resistor or a first attenuator) coupled in series between switch 124-1 and loopback signal port 90. Switch 124-1 may be coupled in series between resistor 126-1 and coupled port P3. Attenuator circuitry 68 may also include a second resistor 126-2 (e.g., a second attenuating resistor or a second attenuator) coupled in series between switch 124-2 and loopback signal port 90. Switch 124-2 may be coupled in series between resistor 126-1 and coupled port P3 (e.g., switch 124-1 and resistor 126-1 may be coupled in parallel with switch 124-2 and resistor 126-2 between coupled node P3 and loopback signal port 90). Alternatively, switches 124 may be coupled in series between resistors 126 and loopback signal port 90. If desired, coupled node P3 (and the source-drain terminal of switches 124 that are coupled to coupled node P3) may also be coupled to termination impedance 134 by a corresponding switch 130 in termination 65 (e.g., switch 130 may be coupled in series between coupled node P3 and termination impedance 134). Switch 130 may be opened to decouple coupled node P3 from termination 65. Switch 130 may be closed to couple coupled node P3 to termination 65. Switch 130 may be omitted if desired.

Switches 124 may receive I/O signal SIGIO (e.g., via I/O port 91 of FIG. 3). I/O signal SIGIO may selectively close or open different combinations of switches 124 to adjust the attenuation level of attenuator circuitry 68 over time. I/O signal SIGIO may, for example, include analog control voltages that are supplied to gate terminals of switches 124 or may, if desired, include respective bits of a digital control signal that are supplied to each of the gate terminals of switches 124. If desired, baseband circuitry (e.g., on radio chip 54 or in processing circuitry 26 of FIG. 2) may generate I/O signals SIGIO and may supply the I/O signals to FEM 40 (e.g., over an inter-chip link, path, or control line, over a communications bus of wireless circuitry 24, etc.).

Resistors 126 may have different resistances or, if desired, two or more resistors 126 may have the same resistance. I/O signal SIGIO may open a switch 124 to decouple the corresponding resistor 126 from loopback signal path 70 (e.g., removing that resistor from the attenuation performed by attenuator circuitry 68) and may close a switch 124 to couple the corresponding resistor 126 into loopback signal path 70 (e.g., adding that resistor to the attenuation performed by attenuator circuitry 68). I/O signal SIGIO may, for example, control switches 124 to configure attenuator circuitry 68 to impart a desired attenuation level to the loopback signals RFSIG' output onto loopback signal port 90.

I/O signal SIGIO may, for example, control attenuator circuitry 68 to apply a relatively high attenuation level if/when the transmit power level of transmitter 30 is relatively high (e.g., exceeds second threshold THB of FIG. 6 or a different threshold PX). This may serve to reduce the voltage swing at the input of loopback receiver 78 when the transmit power level is relatively high, thereby relaxing linearity requirements for loopback receiver 78 while operating in the linearity-limited region. I/O signal SIGIO may also, for example, control attenuator circuitry 68 to apply a relatively low attenuation level if/when the transmit power level of transmitter 30 is relatively low (e.g., less than first threshold THA of FIG. 6 or a different threshold such as threshold PX). This may serve to increase the voltage swing at the input of loopback receiver 78 and thus the SNR of loopback receiver 78 while operating in the noise-limited region. If desired, I/O signal SIGIO may control attenuator circuitry 68 to apply other attenuation levels (e.g., moderate attenuation levels) for other (e.g., moderate) transmit power level of transmitter 30.

The example of FIG. 7 is illustrative and non-limiting. If desired, attenuator circuitry 68 may be disposed on signal path 60 (e.g., between port P1 and signal port 88). However, coupling attenuator circuitry 68 between coupled port P3 and loopback signal port 90 may prevent attenuator circuitry 68 from introducing loss/attenuation to the radio-frequency signals RFSIG propagating along signal path 60. If desired, switches 124, 128, 130, and/or 132 may be replaced with any desired switching circuitry. In general, attenuator circuitry 68 may include a set of M resistors 126 coupled in series with a set of M switches 124, which are coupled in parallel between coupled node P3 and loopback signal port 90, where M is any desired integer greater than one (e.g., N = 2, 3, 4, 5, 1-16, 8-32, 1-128, etc.). In practice, increasing the size of integer M may increase the number of different attenuation levels that may be applied by attenuator circuitry 68. Resistors 126 may be arranged in other manners if desired (e.g., may be implemented using a pi network topology, a T network topology, etc.). The example of FIG. 7 in which attenuator circuitry 68 is programmed by I/O signal SIGIO to exhibit a corresponding attenuation level is illustrative and non-limiting. If desired, the switches 124 of attenuator circuitry 68 may be replaced with one or more diodes.

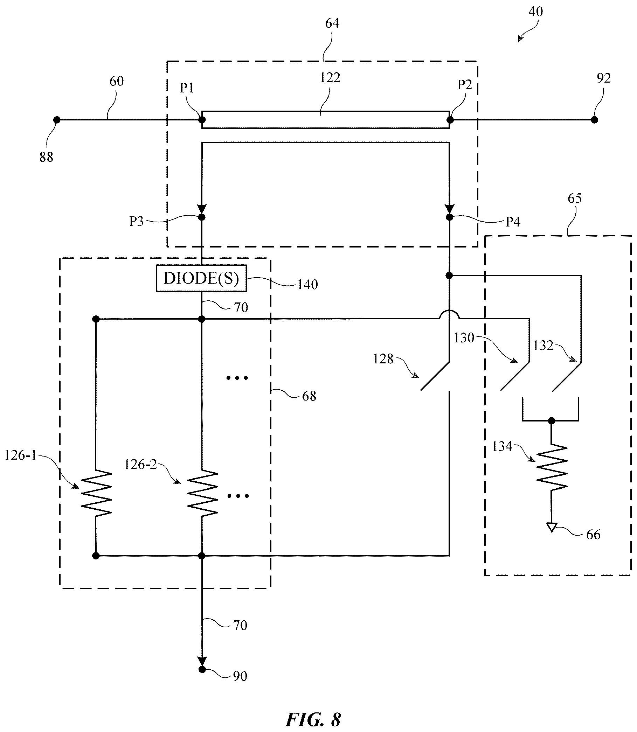

FIG. 8 is a circuit diagram illustrating one example in which the switches 124 of attenuator circuitry 68 are replaced with one or more diodes. As shown in FIG. 8, switches 126 may be omitted from attenuator circuitry 68 in this implementation, if desired. Attenuator circuitry 68 may include one or more diodes 140 that are coupled between resistors 126 and coupled node P3. If desired, diode(s) 140 may include a first diode coupled in series between resistor 126-1 and coupled node P3, a second diode coupled in series between resistor 126-2 and coupled node P3, etc. The diode(s) may be configured to exhibit operating points that cause the diodes to form short circuit impedances between coupled node P3 and the corresponding resistor(s) 126 when the power level of the radio-frequency signal supplied to coupled node P3 exceeds one or more threshold levels and to form open circuit impedances when the power level is below the one or more threshold levels. If desired, attenuator circuitry 68 may also include one or more power detectors (not shown) that serve to detect when the power level crosses above/below the one or more thresholds to trigger the diodes to begin or stop passing current associated with the radio-frequency signals from coupled node P3 to loopback signal port 90. In other words, the diodes may form switches that are automatically opened and closed based on the transmit power level of radio-frequency signals RFSIG without needing an external control signal such as I/O signal SIGIO.

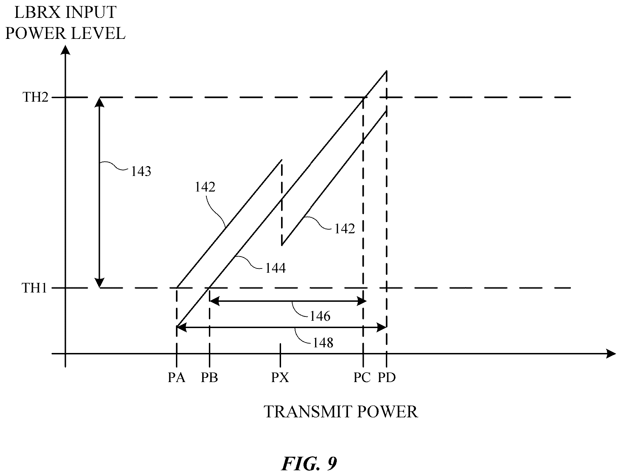

FIG. 9 is a plot showing how adjusting the attenuation level of attenuator circuitry 68 may serve to increase the dynamic range of loopback receiver 78. The vertical axis of FIG. 9 plots the input power level of loopback receiver 78. The horizontal axis of FIG. 9 plots the transmit power level of radio-frequency signals RFSIG and transmitter 30. Curve 144 plots the input power level of loopback receiver 78 across transmit power levels in implementations where attenuator circuitry 68 provides the same (constant) attenuation level across all of the transmit power levels (e.g., while on-chip matching circuitry 76 of FIG. 3 remains at a constant setting). Curve 142 plots the input power level of loopback receiver 78 across transmit power levels in implementations where attenuator circuitry 68 is adjustable between at least a relatively low attenuation level and a relatively high attenuation level.

Loopback receiver 78 may have an ideal input power level operating range 143 between a lower threshold TH1 and an upper threshold TH2. Loopback receiver 78 may, for example, exhibit satisfactory linearity and SNR for input power levels within operating range 143. On the other hand, if care is not taken, loopback receiver 78 may exhibit insufficient SNR for input power levels below threshold TH1 and may exhibit insufficient linearity for input power levels above threshold TH2. As shown by curve 144, in implementations where attenuator circuitry 68 provides constant attenuation as a function of transmit power level, loopback receiver 78 may receive loopback signals RFSIG' at input power levels below threshold TH1 when the transmit power level of radio-frequency signals RFSIG is relatively low (e.g., below transmit power level PB). For transmit power levels as low as transmit power level PA, for example, loopback receiver 78 may receive loopback signals RFSIG' at an insufficient input power level (e.g., below threshold TH1) that causes the loopback receiver to exhibit insufficient SNR.

Similarly, in implementations where attenuator circuitry 68 provides constant attenuation as a function of transmit power level, loopback receiver 78 may receive loopback signals RFSIG' at input power levels above threshold TH2 when the transmit power level of radio-frequency signals RFSIG is relatively high (e.g., above transmit power level PC). For transmit power levels as high as transmit power level PD, for example, loopback receiver 78 may receive loopback signals RFSIG' at an excessive input power level (e.g., above threshold TH2) that causes the loopback receiver to exhibit insufficient linearity. Put differently, keeping attenuation level and impedance matching constant across transmit power levels may limit the dynamic range of loopback receiver 78 to dynamic range 146 (e.g., a range of transmit power levels over which the loopback receiver exhibits both sufficient SNR and sufficient linearity).

As shown by curve 142, attenuator circuitry 68 may be configured to exhibit a first (e.g., relatively low) attenuation level while radio-frequency signals RFSIG are being transmitted at transmit power levels less than threshold PX such as transmit power levels between transmit power level PA and threshold PX (e.g., while operating in noise-limited mode 100 and lower power levels of mid-gain mode 104 of FIG. 5). Attenuator circuitry 68 may be reconfigured to exhibit a second (e.g., relatively high) attenuation level while radio-frequency signals RFSIG are being transmitted at transmit power levels greater than threshold PX such as transmit power levels between threshold PX and transmit power level PD (e.g., while operating in linearity-limited mode 102 and higher power levels of mid-gain mode 104 of FIG. 5). By adjusting the attenuation of attenuator circuitry 68 if/when the transmit power level crosses threshold PX, loopback signals RFSIG' may be provided to loopback receiver 78 at input power levels that remain within operating range 143 (e.g., below threshold TH2 and above threshold TH1) across the entire range of transmit power levels from power level PA to power level PD. This may effectively extend the dynamic range of loopback receiver 78 from dynamic range 146 to dynamic range 148. The example of FIG. 9 is illustrative and non-limiting. In practice, curves 142 and 144 may have other shapes. Attenuator circuitry 68 may be switched between more than two attenuation levels if desired.

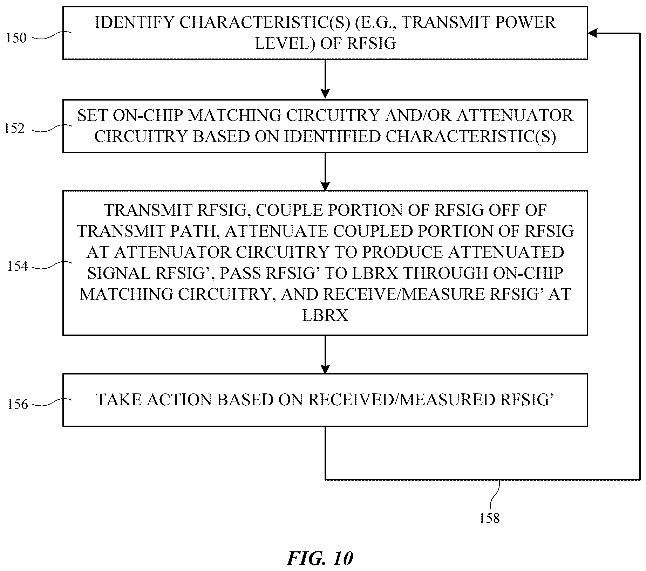

FIG. 10 is a flow chart of illustrative operations that may be performed by wireless circuitry 24 to transmit and measure radio-frequency signals RFSIG. At operation 150, control circuitry 14 (FIG. 1) may identify one or more characteristics of radio-frequency signals RFSIG and/or transmitter 30. The characteristic(s) may include, for example, the transmit power level of radio-frequency signals RFSIG and/or transmitter 30. If desired, the characteristic(s) may include other signal characteristics such as frequency, bandwidth, modulation coding scheme, etc. Some or all of the characteristics may be set by a communications schedule for wireless circuitry 24 (e.g., as generated and maintained by control circuitry 14 and/or a network in communication with wireless circuitry 24), by baseband circuitry in wireless circuitry 24 and/or a host processor (e.g., based on an RFE budget and/or sensor data to help ensure that the transmitted signals do not violate RFE regulations), by one or more software applications running on device 10, by an operating system of device 10, etc. Control circuitry 14 may identify the characteristic(s) prior to transmitting radio-frequency signals RFSIG, after a previous transmission of radio-frequency signals RFSIG, and/or while concurrently transmitting radio-frequency signals RFSIG.

At operation 152, control circuitry 14 may adjust the impedance matching performed by on-chip matching circuitry 76 (e.g., may control on-chip matching circuitry 76 to intentionally mismatch input impedance Zin from impedance Z0 or to match input impedance Zin to impedance Z0) and/or may adjust the attenuation level of attenuator circuitry 68 based on the identified characteristic(s) (e.g., the transmit power level of transmitter 30 and radio-frequency signals RFSIG). This may include, for example, placing wireless circuitry 24 into one of modes 100-104 of FIG. 5. For example, if/when the transmit power level of radio-frequency signals RFSIG is relatively low, control circuitry 14 may control on-chip matching circuitry 76 to increase input impedance Zin (e.g., to higher than impedance Z0) and/or may control attenuator circuitry 68 to decrease its attenuation level. Conversely, if/when the transmit power level of radio-frequency signals RFSIG is relatively high, control circuitry 14 may control on-chip matching circuitry 76 to decrease input impedance Zin (e.g., to lower than impedance Z0) and/or may control attenuator circuitry 68 to increase its attenuation level. If/when the transmit power level of radio-frequency signals RFSIG is moderate, control circuitry 14 may control on-chip matching circuitry 76 to match impedance Zin to impedance Z0 and/or may control attenuator circuitry 68 to exhibit a moderate attenuation level (or either a high or low attenuation level depending on whether the transmit power level is below or above threshold PX).

At operation 154, transmitter 30 may transmit radio-frequency signals RFSIG with the identified characteristic(s) (e.g., at the identified transmit power level) over radio-frequency transmission line path 36. Signal coupler 64 may couple a portion of the radio-frequency signals off of radio-frequency transmission line path 36 and onto loopback path 80. Signal attenuator 68 may apply its set attenuation level to the coupled portion of the radio-frequency signals, producing loopback signals RFSIG'. On-chip matching network 76 may apply its set impedance matching between the input of loopback receiver 78 and loopback path 80 (e.g., an intentional impedance mismatch for relatively low or relatively high transmit power levels and an impedance match for moderate transmit power levels). Loopback receiver 78 may receive, measure, and/or process loopback signals RFSIG'.

At operation 156, control circuitry 14 may perform one or more operations or actions based on the loopback signals RFSIG' that were received, measured, and/or processed by loopback receiver 78. This may include, for example, identifying one or more operating characteristics of wireless circuitry 24 such as an impedance of a circuit block along radio-frequency transmission line path 36 and/or antenna 42, S-parameter values, VSWR values, wireless performance metric data (e.g., SNR values, transmit power levels, error rate values, adjacent channel leakage ratio values, linearity measurements, or other wireless performance metric measurements), etc. This may also include, for example, controlling, adjusting, and/or calibrating one or more components in wireless circuitry 24 based on the loopback signals RFSIG' that were received, measured, and/or processed by loopback receiver 78. For example, control circuitry 14 may adjust the transmit power level, maximum transmit power level, or transmit power level backoff of transmitter 30 or another transmitter in wireless circuitry 24, may adjust a frequency of transmitter 30 or another transmitter in wireless circuitry 24, may adjust other impedance matching circuitry in wireless circuitry 24, may adjust a tuning setting for antenna 42, may adjust a beam pointing direction of a phased antenna array in wireless circuitry 24, may adjust a PA gain of transmitter 30, may activate or deactivate one or more antennas in antenna 24, may adjust DPD performed in transmitter 30, may adjust envelope tracking operations, may display one or more images, may output an audio signal, may perform a wireless data transmission, may adjust radar and/or other radio-frequency ranging operations, and/or may perform any other desired operations based on the loopback signals RFSIG' that were received, measured, and/or processed by loopback receiver 78. Processing may then loop back to operation 150 via path 158 as the characteristic(s) (e.g., transmit power level) change over time.

The methods and operations described above in connection with FIGS. 1-10 may be performed by the components of device 10 using software, firmware, and/or hardware (e.g., dedicated circuitry or hardware). Software code for performing these operations may be stored on non-transitory computer readable storage media (e.g., tangible computer readable storage media) stored on one or more of the components of device 10 (e.g., storage circuitry 16 and/or wireless circuitry 24 of FIG. 1). The software code may sometimes be referred to as software, data, instructions, program instructions, or code. The non-transitory computer readable storage media may include drives, non-volatile memory such as non-volatile random-access memory (NVRAM), removable flash drives or other removable media, other types of random-access memory, etc. Software stored on the non-transitory computer readable storage media may be executed by processing circuitry on one or more of the components of device 10 (e.g., processing circuitry in wireless circuitry 24, processing circuitry 18 or control circuitry 14 of FIG. 1, etc.). The processing circuitry may include microprocessors, application processors, digital signal processors, central processing units (CPUs), application-specific integrated circuits with processing circuitry, or other processing circuitry.

As used herein, the term "concurrent" means at least partially overlapping in time. In other words, first and second events are referred to herein as being "concurrent" with each other if at least some of the first event occurs at the same time as at least some of the second event (e.g., if at least some of the first event occurs during, while, or when at least some of the second event occurs). First and second events can be concurrent if the first and second events are simultaneous (e.g., if the entire duration of the first event overlaps the entire duration of the second event in time) but can also be concurrent if the first and second events are non-simultaneous (e.g., if the first event starts before or after the start of the second event, if the first event ends before or after the end of the second event, or if the first and second events are partially non-overlapping in time). As used herein, the term "while" is synonymous with "concurrent."

For one or more aspects, at least one of the components set forth in one or more of the preceding figures may be configured to perform one or more operations, techniques, processes, or methods as set forth in the example section below.

### Examples

Example 1 includes wireless circuitry comprising: a radio chip; a transmitter on the radio chip; a loopback receiver on the radio chip; a radio-frequency transmission line path coupled to the transmitter; a front-end module (FEM) disposed on the radio-frequency transmission line path; a signal coupler on the FEM and coupled to the radio-frequency transmission line path; a loopback path that couples the signal coupler on the FEM to the loopback receiver on the radio chip; and adjustable matching circuitry on the radio chip, coupled to the loopback path, and configured to adjust an input impedance of the loopback receiver.

Example 2 includes the wireless circuitry of example 1, wherein a segment of the loopback path is disposed on the radio chip and is coupled between a loopback signal port of the radio chip and the loopback receiver, the adjustable matching circuitry comprising: a first resistor; and a first switch, wherein the first switch is coupled in series between the first resistor and a reference potential and the first resistor is coupled in series between the first switch and the segment of the loopback path.

Example 3 includes the wireless circuitry of example 2, the adjustable matching circuitry further comprising: a second resistor having a lower resistance than the first resistor; and a second switch, wherein the second switch is coupled in series between the second resistor and the reference potential and the second resistor is coupled in series between the second switch and the segment of the loopback path.

Example 4 includes the wireless circuitry of example 3, wherein: the adjustable matching circuitry is switchable between at least a first state, a second state, and a third state, in the first state, the first switch and the second switch are open, in the second state, the first switch and the second switch are closed, and in the third state, the first switch is closed while the second switch is open.

Example 5 includes the wireless circuitry of example 4, wherein: the transmitter is configured to transmit a radio-frequency signal on the radio-frequency transmission line path at a transmit power level, and the adjustable matching circuitry is switched between the first, second, and third states based on the transmit power level.

Example 6 includes the wireless circuitry of example 5, wherein: the adjustable matching circuitry is in the first state while the transmit power level is less than a first threshold, the adjustable matching circuitry is in the second state while the transmit power level exceeds a second threshold greater than the first threshold, and the adjustable matching circuitry is in the third state while the transmit power level is greater than the first threshold and less than the second threshold.

Example 7 includes the wireless circuitry of example 1, wherein the adjustable matching circuitry is configured to adjust the input impedance of the loopback receiver based on a transmit power level of the transmitter.

Example 8 includes the wireless circuitry of example 7, wherein the adjustable matching circuitry is configured to introduce a first non-zero mismatch between the input impedance and an impedance of the loopback path when the transmit power level is less than a first threshold.

Example 9 includes the wireless circuitry of example 8, wherein the adjustable matching circuitry is configured to introduce a second non-zero mismatch between the input impedance and the impedance of the loopback path when the transmit power level exceeds a second threshold greater than the first threshold.

Example 10 includes the wireless circuitry of example 9, wherein the adjustable matching circuitry is configured to match the input impedance to the impedance of the loopback path when the transmit power level is greater than the first threshold and less than the second threshold.

Example 11 includes the wireless circuitry of example 9, wherein: the loopback receiver comprises amplifier circuitry, the loopback receiver is configured to decrease a gain of the amplifier circuitry while the adjustable impedance matching circuitry introduces the first non-zero mismatch and the transmit power level is below the first threshold, and the loopback receiver is configured to increase a gain of the amplifier circuitry while the adjustable impedance matching circuitry introduces the second non-zero mismatch and while the transmit power level is above the second threshold.

Example 12 includes the wireless circuitry of example 1, wherein: the signal coupler has a coupled node and an isolated node, the loopback path comprises a first transmission line coupled between the coupled node of the signal coupler and a loopback signal port of the FEM, a second transmission line coupled between the loopback signal port of the FEM and a loopback signal port of the radio chip, and a third transmission line coupled between the loopback signal port of the radio chip and the loopback receiver, the FEM comprises an impedance termination coupled to the isolated node, and the FEM comprises a fixed attenuator disposed on the first transmission line, wherein the fixed attenuator is configured to apply a constant attenuation level to a radio-frequency signal coupled off of the radio-frequency transmission line path by the signal coupler.

Example 13 includes the wireless circuitry of example 1, wherein: the signal coupler has a coupled node and an isolated node, the loopback path comprises a first transmission line coupled between the coupled node of the signal coupler and a loopback signal port of the FEM, a second transmission line coupled between the loopback signal port of the FEM and a loopback signal port of the radio chip, and a third transmission line coupled between the loopback signal port of the radio chip and the loopback receiver, the FEM comprises an impedance termination coupled to the isolated node, and the FEM comprises an adjustable attenuator disposed on the first transmission line, wherein the adjustable attenuator is configured to apply a varying attenuation level to a radio-frequency signal coupled off of the radio-frequency transmission line path by the signal coupler.

Example 14 includes a radio chip comprising: a transmitter; a first transmission line that couples the transmitter to a signal port of the radio chip, wherein the transmitter is configured to output a radio-frequency signal onto the transmission line at a transmit power level; a loopback receiver; a second transmission line that couples a loopback signal port of the radio chip to the loopback receiver, wherein the loopback receiver is configured to receive a loopback signal associated with the radio-frequency signal via the second transmission line; and matching circuitry coupled to the second transmission line and configured to adjust, based on the transmit power level, an input impedance of the loopback receiver.

Example 15 includes the radio chip of example 14, wherein the matching circuitry is configured to increase the input impedance when the transmit power level is less than a first threshold and is configured to decrease the input impedance when the transmit power level exceeds a second threshold greater than the first threshold.

Example 16 includes the radio chip of example 15, wherein the matching circuitry comprises: a set of two or more switchable shunt resistances coupled in parallel between the second transmission line and a reference potential.

Example 17 includes the radio chip of example 14, wherein the matching circuitry comprises: a first resistor coupled to the second transmission line; a first transistor coupled in series between the first resistor and a reference potential; a second resistor coupled to the second transmission line and having a lower resistance than the first resistor; and a second transistor coupled in series between the second resistor and the reference potential.

Example 18 includes a method of operating wireless circuitry, the method comprising: transmitting, using a transmitter, a radio-frequency signal onto a radio-frequency transmission line path at a transmit power level; coupling, using a signal coupler, a portion of the radio-frequency signal off of the radio-frequency transmission line path and onto a loopback path; conveying, using the loopback path, the portion of the radio-frequency signal from the signal coupler to a loopback receiver; and adjusting, using matching circuitry on the loopback path, an input impedance of the loopback receiver based on a transmit power level of the radio-frequency signal.

Example 19 includes the method of example 18, wherein adjusting the input impedance comprises: increasing, above an impedance of the loopback path, the input impedance when the transmit power level is less than a first threshold; decreasing, below the impedance of the loopback path, the input impedance when the transmit power level exceeds a second threshold higher than the first threshold; and matching the input impedance to the impedance of the loopback path when the transmit power level is greater than the first threshold and less than the second threshold.

Example 20 includes the method of example 19, further comprising: amplifying, using amplifier circuitry in the loopback receiver, the portion of the radio-frequency signal; decreasing a gain of the amplifier circuitry when the transmit power level is less than the first threshold; and increasing the gain of the amplifier circuitry when the transmit power level exceeds the second threshold.

Example 21 includes wireless circuitry comprising: a radio chip; a transmitter on the radio chip; a loopback receiver on the radio chip; a radio-frequency transmission line path coupled to the transmitter; a front-end module (FEM) disposed on the radio-frequency transmission line path; a signal coupler on the FEM and coupled to the radio-frequency transmission line path; a loopback path that couples the signal coupler on the FEM to the loopback receiver on the radio chip; and adjustable attenuator circuitry on the FEM and disposed on the loopback path between the signal coupler and a loopback signal port of the FEM.

Example 22 includes the wireless circuitry of example 21, wherein the signal coupler has a coupled node and an isolated node, the isolated node is coupled to a termination, and the adjustable attenuator circuitry is coupled between the coupled node of the signal coupler and the loopback signal port of the FEM.

Example 23 includes the wireless circuitry of example 22, wherein the adjustable attenuator circuitry comprises: a first switch; and a first resistor coupled in series between the first switch and the loopback signal port of the FEM, wherein the first switch is coupled in series between the first resistor and the coupled node of the signal coupler.

Example 24 includes the wireless circuitry of example 23, wherein adjustable attenuator circuitry further comprises: a second switch; and a second resistor coupled in series between the second switch and the loopback signal port of the FEM, wherein the second switch is coupled in series between the second resistor and the coupled node of the signal coupler.

Example 25 includes the wireless circuitry of example 24, wherein the termination comprises: a termination impedance coupled to a reference potential; a third switch coupled in series between the termination impedance and the isolated node of the signal coupler; and a fourth switch coupled in series between the termination impedance and the coupled node of the signal coupler.

Example 26 includes the wireless circuitry of example 25, further comprising: a fifth switch coupled in series between the isolated node of the signal coupler and the loopback signal port of the FEM.

Example 27 includes the wireless circuitry of example 24, wherein the FEM has an input-output (I/O) port that is configured to receive an I/O signal and wherein the I/O signal is configured to control the first switch and the second switch to adjust an attenuation level of the adjustable attenuator circuitry.

Example 28 includes the wireless circuitry of example 27, wherein the I/O signal is configured to control the first switch and the second switch to adjust the attenuation level of the adjustable attenuator circuitry based on a transmit power level of the transmitter.

Example 29 includes the wireless circuitry of example 22, wherein: the radio chip is configured to output a radio-frequency signal onto the radio-frequency transmission line path at a transmit power level, the signal coupler is configured to couple a portion of the radio-frequency signal off of the radio-frequency transmission line path and onto the loopback path, the loopback path is configured to convey the portion of the radio-frequency signal from the signal coupler to the loopback receiver, and the adjustable attenuator circuitry is configured to attenuate the portion of the radio-frequency signal by an attenuation level.

Example 30 includes the wireless circuitry of example 29, wherein the adjustable attenuator circuitry is configured to adjust the attenuation level based on the transmit power level.

Example 31 includes the wireless circuitry of example 30, wherein the loopback path comprises: a first signal path on the FEM and coupled between the coupled node and the loopback signal port of the FEM, the adjustable attenuator circuitry being disposed on the first signal path; a second signal path coupled between the loopback signal port of the FEM and a loopback signal port of the radio chip; and a third signal path coupled between the loopback signal port of the radio chip and the loopback receiver.

Example 32 includes the wireless circuitry of example 30, wherein the adjustable attenuator circuitry comprises: a set of two or more resistors coupled in parallel between the coupled node of the signal coupler and the loopback signal port of the FEM; and one or more diodes coupled between the set of two or more resistors and the coupled node of the signal coupler.

Example 33 includes the wireless circuitry of example 21, wherein: the adjustable attenuator circuitry is configured to exhibit a first attenuation level while a transmit power level of the transmitter is less than a threshold; and the adjustable attenuator circuitry is configured to exhibit a second attenuation level while the transmit power level of the transmitter exceeds the threshold, the second attenuation level being greater than the first attenuation level.

Example 34 includes a radio-frequency front end module comprising: a radio-frequency transmission line; a signal coupler coupled to the radio-frequency transmission line, wherein the signal coupler has a coupled node and an isolated node; a termination coupled to the isolated node; a signal path that couples the coupled node of the signal coupler to a loopback signal output port of the radio-frequency front end module; and attenuator circuitry disposed on the signal path between the coupled node of the signal coupler and the loopback signal output port, wherein the attenuator circuitry is adjustable between at least a first attenuation level and a second attenuation level that is lower than the first attenuation level.

Example 35 includes the radio-frequency front end module of example 34, wherein: the radio-frequency transmission line is configured to transmit a radio-frequency signal output by a radio chip that is separate from the radio-frequency front end module, the attenuator circuitry is configured to exhibit the first attenuation level while a transmit power level of the radio-frequency signal exceeds a threshold, and the attenuator circuitry is configured to exhibit the second attenuation level while the transmit power level of the radio-frequency signal is less than the threshold.

Example 36 includes the radio-frequency front end module of example 35, wherein the adjustable attenuator comprises: a set of two or more resistors coupled in parallel between the coupled node of the signal coupler and the loopback signal output port; and one or more diodes coupled between the set of two or more resistors and the coupled node of the signal coupler.

Example 37 includes the radio-frequency front end module of example 35, wherein the adjustable attenuator comprises: a first resistor and a first transistor coupled in series between the coupled node of the signal coupler and the loopback signal output port; and a second resistor and a second transistor coupled in series between the coupled node of the signal coupler and the loopback signal output port in parallel with the first resistor and the first transistor.

Example 38 includes the radio-frequency front end module of example 37, wherein: the radio-frequency front end module has an input-output (I/O) port configured to receive an I/O signal that controls a state of the first switch and a state of the second switch, the termination comprises an impedance coupled to a reference potential, a third switch coupled in series between the impedance and the isolated node, and a fourth switch coupled in series between the impedance and the coupled node, and the radio-frequency front end module further comprises a fifth switch coupled in series between the isolated node and the loopback signal output port.

Example 39 includes a method of operating wireless circuitry, the method comprising: transmitting, using a transmitter, a radio-frequency signal onto a radio-frequency transmission line path at a transmit power level; coupling, using a signal coupler, a portion of the radio-frequency signal off of the radio-frequency transmission line path and onto a loopback path, the signal coupler having an isolated node coupled to a termination and having a coupled node; conveying, using the loopback path, the portion of the radio-frequency signal from the coupled node of the signal coupler to a loopback receiver; and adjusting, using a signal attenuator on the loopback path, an attenuation level of the portion of the radio-frequency signal based on a transmit power level of the radio-frequency signal.

Example 40 includes the method of example 39, wherein adjusting the attenuation level comprises: increasing the attenuation level when the transmit power level exceeds a threshold; and decreasing the attenuation level when the transmit power is less than the threshold.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

In accordance with an embodiment, wireless circuitry includes a radio chip, a transmitter on the radio chip, a loopback receiver on the radio chip, a radio-frequency transmission line path coupled to the transmitter, a front-end module (FEM) disposed on the radio-frequency transmission line path, a signal coupler on the FEM and coupled to the radio-frequency transmission line path, a loopback path that couples the signal coupler on the FEM to the loopback receiver on the radio chip, and adjustable matching circuitry on the radio chip, coupled to the loopback path, and configured to adjust an input impedance of the loopback receiver.

In accordance with another embodiment, a segment of the loopback path is optionally disposed on the radio chip and is coupled between a loopback signal port of the radio chip and the loopback receiver, the adjustable matching circuitry includes a first resistor and a first switch, where the first switch is coupled in series between the first resistor and a reference potential and the first resistor is coupled in series between the first switch and the segment of the loopback path.

In accordance with another embodiment, the adjustable matching circuitry optionally further includes a second resistor having a lower resistance than the first resistor and a second switch, where the second switch is coupled in series between the second resistor and the reference potential and the second resistor is coupled in series between the second switch and the segment of the loopback path.

In accordance with another embodiment, the adjustable matching circuitry is optionally switchable between at least a first state, a second state, and a third state, in the first state, the first switch and the second switch are open, in the second state, the first switch and the second switch are closed, and in the third state, the first switch is closed while the second switch is open.

In accordance with another embodiment, the transmitter is optionally configured to transmit a radio-frequency signal on the radio-frequency transmission line path at a transmit power level and the adjustable matching circuitry is switched between the first, second, and third states based on the transmit power level.

In accordance with another embodiment, the adjustable matching circuitry is optionally in the first state while the transmit power level is less than a first threshold, the adjustable matching circuitry is optionally in the second state while the transmit power level exceeds a second threshold greater than the first threshold, and the adjustable matching circuitry is optionally in the third state while the transmit power level is greater than the first threshold and less than the second threshold.

In accordance with another embodiment, the adjustable matching circuitry is optionally configured to adjust the input impedance of the loopback receiver based on a transmit power level of the transmitter.

In accordance with another embodiment, the adjustable matching circuitry is optionally configured to introduce a first non-zero mismatch between the input impedance and an impedance of the loopback path when the transmit power level is less than a first threshold.

In accordance with another embodiment, the adjustable matching circuitry is optionally configured to introduce a second non-zero mismatch between the input impedance and the impedance of the loopback path when the transmit power level exceeds a second threshold greater than the first threshold.

In accordance with another embodiment, the adjustable matching circuitry is optionally configured to match the input impedance to the impedance of the loopback path when the transmit power level is greater than the first threshold and less than the second threshold.

In accordance with another embodiment, the loopback receiver optionally includes amplifier circuitry, the loopback receiver is configured to decrease a gain of the amplifier circuitry while the adjustable impedance matching circuitry introduces the first non-zero mismatch and the transmit power level is below the first threshold, and the loopback receiver is configured to increase a gain of the amplifier circuitry while the adjustable impedance matching circuitry introduces the second non-zero mismatch and while the transmit power level is above the second threshold.

In accordance with another embodiment, the signal coupler optionally has a coupled node and an isolated node, the loopback path optionally includes a first transmission line coupled between the coupled node of the signal coupler and a loopback signal port of the FEM, a second transmission line coupled between the loopback signal port of the FEM and a loopback signal port of the radio chip, and a third transmission line coupled between the loopback signal port of the radio chip and the loopback receiver, the FEM optionally includes an impedance termination coupled to the isolated node, and the FEM optionally includes a fixed attenuator disposed on the first transmission line, where the fixed attenuator is configured to apply a constant attenuation level to a radio-frequency signal coupled off of the radio-frequency transmission line path by the signal coupler.

In accordance with another embodiment, the signal coupler optionally has a coupled node and an isolated node, the loopback path optionally includes a first transmission line coupled between the coupled node of the signal coupler and a loopback signal port of the FEM, a second transmission line coupled between the loopback signal port of the FEM and a loopback signal port of the radio chip, and a third transmission line coupled between the loopback signal port of the radio chip and the loopback receiver, the FEM optionally includes an impedance termination coupled to the isolated node, and the FEM optionally includes an adjustable attenuator disposed on the first transmission line, where the adjustable attenuator is configured to apply a varying attenuation level to a radio-frequency signal coupled off of the radio-frequency transmission line path by the signal coupler.

In accordance with an embodiment, a radio chip includes a transmitter; a first transmission line that couples the transmitter to a signal port of the radio chip, where the transmitter is configured to output a radio-frequency signal onto the transmission line at a transmit power level; a loopback receiver; a second transmission line that couples a loopback signal port of the radio chip to the loopback receiver, where the loopback receiver is configured to receive a loopback signal associated with the radio-frequency signal via the second transmission line; and matching circuitry coupled to the second transmission line and configured to adjust, based on the transmit power level, an input impedance of the loopback receiver.

In accordance with another embodiment, the matching circuitry is optionally configured to increase the input impedance when the transmit power level is less than a first threshold and is configured to decrease the input impedance when the transmit power level exceeds a second threshold greater than the first threshold.

In accordance with another embodiment, the matching circuitry optionally includes a set of two or more switchable shunt resistances coupled in parallel between the second transmission line and a reference potential.

In accordance with another embodiment, the matching circuitry optionally includes a first resistor coupled to the second transmission line, a first transistor coupled in series between the first resistor and a reference potential, a second resistor coupled to the second transmission line and having a lower resistance than the first resistor, and a second transistor coupled in series between the second resistor and the reference potential.

In accordance with an embodiment, a method of operating wireless circuitry, the method includes transmitting, using a transmitter, a radio-frequency signal onto a radio-frequency transmission line path at a transmit power level; coupling, using a signal coupler, a portion of the radio-frequency signal off of the radio-frequency transmission line path and onto a loopback path; conveying, using the loopback path, the portion of the radio-frequency signal from the signal coupler to a loopback receiver; and adjusting, using matching circuitry on the loopback path, an input impedance of the loopback receiver based on a transmit power level of the radio-frequency signal.

In accordance with another embodiment, adjusting the input impedance optionally includes increasing, above an impedance of the loopback path, the input impedance when the transmit power level is less than a first threshold; decreasing, below the impedance of the loopback path, the input impedance when the transmit power level exceeds a second threshold higher than the first threshold; and matching the input impedance to the impedance of the loopback path when the transmit power level is greater than the first threshold and less than the second threshold.

In accordance with another embodiment, the method optionally further includes amplifying, using amplifier circuitry in the loopback receiver, the portion of the radio-frequency signal; decreasing a gain of the amplifier circuitry when the transmit power level is less than the first threshold; and increasing the gain of the amplifier circuitry when the transmit power level exceeds the second threshold.

The foregoing is illustrative and various modifications can be made to the described embodiments. The foregoing embodiments may be implemented individually or in any combination.

## Claims

1. Wireless circuitry comprising:
a radio chip;
a transmitter on the radio chip;
a loopback receiver on the radio chip;
a radio-frequency transmission line path coupled to the transmitter;
a front-end module (FEM) disposed on the radio-frequency transmission line path;
a signal coupler on the FEM and coupled to the radio-frequency transmission line path;
a loopback path that couples the signal coupler on the FEM to the loopback receiver on the radio chip; and
adjustable matching circuitry on the radio chip, coupled to the loopback path, and configured to adjust an input impedance of the loopback receiver.

2. The wireless circuitry of claim 1, wherein a segment of the loopback path is disposed on the radio chip and is coupled between a loopback signal port of the radio chip and the loopback receiver, the adjustable matching circuitry comprising:
a first resistor; and
a first switch, wherein the first switch is coupled in series between the first resistor and a reference potential and the first resistor is coupled in series between the first switch and the segment of the loopback path.

3. The wireless circuitry of claim 2, the adjustable matching circuitry further comprising:
a second resistor having a lower resistance than the first resistor; and
a second switch, wherein the second switch is coupled in series between the second resistor and the reference potential and the second resistor is coupled in series between the second switch and the segment of the loopback path.

4. The wireless circuitry of claim 3, wherein:
the adjustable matching circuitry is switchable between at least a first state, a second state, and a third state,
in the first state, the first switch and the second switch are open,
in the second state, the first switch and the second switch are closed, and
in the third state, the first switch is closed while the second switch is open.

5. The wireless circuitry of claim 4, wherein:
the transmitter is configured to transmit a radio-frequency signal on the radio-frequency transmission line path at a transmit power level,
the adjustable matching circuitry is switched between the first, second, and third states based on the transmit power level,
the adjustable matching circuitry is in the first state while the transmit power level is less than a first threshold,
the adjustable matching circuitry is in the second state while the transmit power level exceeds a second threshold greater than the first threshold, and
the adjustable matching circuitry is in the third state while the transmit power level is greater than the first threshold and less than the second threshold..

6. The wireless circuitry of claim 1, wherein the adjustable matching circuitry is configured to adjust the input impedance of the loopback receiver based on a transmit power level of the transmitter.

7. The wireless circuitry of claim 6, wherein the adjustable matching circuitry is configured to introduce a first non-zero mismatch between the input impedance and an impedance of the loopback path when the transmit power level is less than a first threshold.

8. The wireless circuitry of claim 7, wherein the adjustable matching circuitry is configured to introduce a second non-zero mismatch between the input impedance and the impedance of the loopback path when the transmit power level exceeds a second threshold greater than the first threshold.

9. The wireless circuitry of claim 8, wherein the adjustable matching circuitry is configured to match the input impedance to the impedance of the loopback path when the transmit power level is greater than the first threshold and less than the second threshold.

10. The wireless circuitry of claim 8, wherein:
the loopback receiver comprises amplifier circuitry,
the loopback receiver is configured to decrease a gain of the amplifier circuitry while the adjustable impedance matching circuitry introduces the first non-zero mismatch and the transmit power level is below the first threshold, and
the loopback receiver is configured to increase a gain of the amplifier circuitry while the adjustable impedance matching circuitry introduces the second non-zero mismatch and while the transmit power level is above the second threshold.

11. The wireless circuitry of claim 1, wherein:
the signal coupler has a coupled node and an isolated node,
the loopback path comprises a first transmission line coupled between the coupled node of the signal coupler and a loopback signal port of the FEM, a second transmission line coupled between the loopback signal port of the FEM and a loopback signal port of the radio chip, and a third transmission line coupled between the loopback signal port of the radio chip and the loopback receiver,
the FEM comprises an impedance termination coupled to the isolated node, and
the FEM comprises a fixed attenuator disposed on the first transmission line, wherein the fixed attenuator is configured to apply a constant attenuation level to a radio-frequency signal coupled off of the radio-frequency transmission line path by the signal coupler.

12. The wireless circuitry of claim 1, wherein:
the signal coupler has a coupled node and an isolated node,
the loopback path comprises a first transmission line coupled between the coupled node of the signal coupler and a loopback signal port of the FEM, a second transmission line coupled between the loopback signal port of the FEM and a loopback signal port of the radio chip, and a third transmission line coupled between the loopback signal port of the radio chip and the loopback receiver,
the FEM comprises an impedance termination coupled to the isolated node, and
the FEM comprises an adjustable attenuator disposed on the first transmission line, wherein the adjustable attenuator is configured to apply a varying attenuation level to a radio-frequency signal coupled off of the radio-frequency transmission line path by the signal coupler.

13. A method of operating wireless circuitry, the method comprising:
transmitting, using a transmitter, a radio-frequency signal onto a radio-frequency transmission line path at a transmit power level;
coupling, using a signal coupler, a portion of the radio-frequency signal off of the radio-frequency transmission line path and onto a loopback path;
conveying, using the loopback path, the portion of the radio-frequency signal from the signal coupler to a loopback receiver; and
adjusting, using matching circuitry on the loopback path, an input impedance of the loopback receiver based on a transmit power level of the radio-frequency signal.

14. The method of claim 13, wherein adjusting the input impedance comprises:
increasing, above an impedance of the loopback path, the input impedance when the transmit power level is less than a first threshold;
decreasing, below the impedance of the loopback path, the input impedance when the transmit power level exceeds a second threshold higher than the first threshold; and
matching the input impedance to the impedance of the loopback path when the transmit power level is greater than the first threshold and less than the second threshold.

15. The method of claim 14, further comprising:
amplifying, using amplifier circuitry in the loopback receiver, the portion of the radio-frequency signal;
decreasing a gain of the amplifier circuitry when the transmit power level is less than the first threshold; and
increasing the gain of the amplifier circuitry when the transmit power level exceeds the second threshold.
